# EUROPEAN PATENT SPECIFICATION

(11) **EP 3 567 062 B1**
(45) Date of publication and mention of the grant of the patent: **14.10.2026**
(21) Application number: 17890580.8
(22) Date of filing: 08.12.2017
(51) Int. Cl.: C08F 236/10, C08L 47/00, C08K 3/04, C08K 3/36

(54) **MODIFIED CONJUGATED DIENE-BASED POLYMER AND RUBBER COMPOSITION INCLUDING THE SAME**
MODIFIZIERTES POLYMER AUF BASIS VON KONJUGIERTEM DIEN UND DIESES ENTHALTENDE KAUTSCHUKZUSAMMENSETZUNG
POLYMÈRE MODIFIÉ À BASE DE DIÈNE CONJUGUÉ ET COMPOSITION DE CAOUTCHOUC LE CONTENANT

(30) Priority: 03.01.2017 KR 20170000749; 31.07.2017 KR 20170097189
(43) Date of publication of application: 13.11.2019
(60) Divisional application: 26203075.2
(73) Proprietor: LG Chem, Ltd., Seoul 07336 (KR)
(72) Inventor: LEE, Ro Mi, Daejeon 34122 (KR); KIM, No Ma, Daejeon 34122 (KR); KIM, Yu Jin, Daejeon 34122 (KR); LEE, Ho Young, Daejeon 34122 (KR); KIM, Sun Keun, Daejeon 34122 (KR); NA, Su Min, Daejeon 34122 (KR); NA, Youk Reol, Daejeon 34122 (KR); CHOI, Heung Yeal, Daejeon 34122 (KR)
(74) Representative: Vossius & Partner Patentanwälte Rechtsanwälte mbB
(86) International application number: PCT/KR2017/014424
(87) International publication number: WO 2018/128289

(56) References cited:
- EP-A1- 2 045 272
- EP-A1- 2 749 575
- EP-A1- 2 754 674
- EP-A1- 2 826 793
- EP-A1- 3 070 105
- EP-A1- 3 093 297
- EP-A1- 3 093 302
- EP-A1- 3 345 940
- JP-A- 2016 037 543
- KR-A- 20110 007 087
- KR-A- 20160 140 624
- KR-B1- 100 932 356
- KR-B1- 101 600 722

## Description

### TECHNICAL FIELD

### [Cross-reference to Related Applications]

The present application claims the benefit of priority based on Korean Patent Application Nos. 10-2017-0000749, filed on January 3, 2017, and 10-2017-0097189, filed on July 31, 2017.

### [Technical Field]

The present invention relates to a modified conjugated diene-based polymer, and more particularly, to a modified conjugated diene-based polymer which is prepared by continuous polymerization, and has excellent processability, narrow molecular weight distribution, and excellent physical properties, and a rubber composition including the same.

### BACKGROUND ART

According to the recent demand for cars having a low fuel consumption ratio, a conjugated diene-based polymer having modulational stability represented by wet skid resistance as well as low rolling resistance, and excellent abrasion resistance and tensile properties is required as a rubber material for tires.

In order to reduce the rolling resistance of tires, there is a method of reducing hysteresis loss of vulcanized rubber, and rebound resilience at 50°C to 80°C, tan δ, Goodrich heating, or the like is used as an evaluation index of the vulcanized rubber. That is, it is desirable to use a rubber material having high rebound resilience at the above temperature or a low tan δ value or Goodrich heating.

Natural rubbers, polyisoprene rubbers, or polybutadiene rubbers are known as rubber materials having low hysteresis loss, but these rubbers have a limitation of low wet skid resistance. Thus, recently, conjugated diene-based polymers or copolymers such as styrene-butadiene rubbers (hereinafter, referred to as "SBR") and butadiene rubbers (hereinafter, referred to as "BR"), are prepared by emulsion polymerization or solution polymerization to be used as rubbers for tires. Among these polymerization methods, the greatest advantage of the solution polymerization in comparison to the emulsion polymerization is that the vinyl structure content and the styrene content, which specify physical properties of the rubber, may be arbitrarily adjusted and its molecular weight and physical properties may be controlled by coupling or modification. Thus, the SBR prepared by the solution polymerization is widely used as a rubber material for tires because it is easy to change a structure of the finally prepared SBR or BR, and movement of chain terminals may be reduced and a coupling force with a filler such as silica and carbon black may be increased by coupling or modification of the chain terminals.

If the solution-polymerized SBR is used as the rubber material for tires, since a glass transition temperature of the rubber is increased by increasing the vinyl content in the SBR, physical properties such as running resistance and braking force, required for tires may be controlled, and fuel consumption may be reduced by appropriately adjusting the glass transition temperature. The solution-polymerized SBR is prepared by using an anionic polymerization initiator and is being used by coupling or modifying the chain terminals of the polymer thus formed using various modifiers. For example, U.S. Patent No. 4,397,994 discloses a method of coupling active anions of the chain terminals of a polymer obtained by polymerizing styrene-butadiene using alkyllithium which is a monofunctional initiator in a non-polar solvent, using a coupling agent such as a tin compound.

Meanwhile, the polymerization of SBR or BR may be conducted by batch-type or continuous-type polymerization. According to the batch-type polymerization, the polymer thus prepared has narrow molecular weight distribution and merits in view of the improvement of physical properties, but there are problems with low productivity and deteriorated processability. According to the continuous-type polymerization, polymerization is continuously carried out and there are merits in view of excellent productivity and the improvement of processability, but there are problems with wide molecular weight distribution and inferior physical properties. Therefore, research on improving productivity, processability and physical properties at the same time during preparing SBR or BR is continuously required.

WO 2016/001372 A1 discloses a modified diene elastomer comprising: a) at least 70% by weight of a diene elastomer fonctionalised at one chain end with a silanol function or a polysiloxane block having a silanol end, and b) more than 0 and up to 30% by weight of a star-branched diene elastomer.

WO 2017/001683 A1 discloses a modified diene elastomer comprising: a) at least 70% by weight of a linear diene elastomer fonctionalised predominantly in the middle of the chain with an alkoxysilane group, and b) more than 0 and up to 30% by weight of a star-branched diene elastomer.

WO 2017/001684 A1 and WO 2017/001685 A1 disclose modified diene elastomers comprising: a) at least 70% by weight of a linear diene elastomer fonctionalised mainly at one chain end by an alkoxysilane group, and b) more than 0 and up to 30% by weight of a star-shaped diene elastomer.

EP 1 457 501 A1 discloses a conjugated diolefin (co)polymer rubber formed from either a conjugated diolefin or a conjugated diolefin and an aromatic vinyl compound, wherein the (co)polymer rubber has a primary amino group and an alkoxysilyl group which are bonded to a (co)polymer chain.

EP 3 345 940 A1 discloses a modified conjugated diene-based polymer, comprising a repeating unit derived from a conjugated diene-based monomer having a trans-1,4 bond content of 80 wt% or more, and a functional group derived from an alkoxysilane-based modifier.

EP 2 749 575 A1 discloses a method for producing a modified conjugated diene polymer comprising a step of obtaining a conjugated diene polymer containing a nitrogen atom in a polymer chain and an active end, and a step of reacting a modifier with the active end of the conjugated diene polymer.

### DISCLOSURE OF THE INVENTION

### TECHNICAL PROBLEM

The present invention has been devised to solve the above-mentioned problems of the conventional technique, and an object of the present invention is to provide a modified conjugated diene-based polymer having excellent processability due to continuous-type polymerization, good physical properties such as tensile properties, and excellent viscoelasticity, and a rubber composition including the same.

### TECHNICAL SOLUTION

To solve the above-described tasks, according to an embodiment of the present invention, there is provided a modified conjugated diene-based polymer having a unimodal shape of gel permeation chromatography (GPC) molecular weight distribution curve, molecular weight distribution (PDI; MWD) of less than 1.7, and a Si content of 100 ppm or more based on weight, and including a repeating unit derived from an aromatic vinyl monomer in an amount from 15 wt% to less than 30 wt%, as defined in the appended claims.

In addition, the present invention provides a rubber composition including the modified conjugated diene-based polymer and a filler.

### ADVANTAGEOUS EFFECTS

Since the modified conjugated diene-based polymer according to the present invention is prepared by continuous-type polymerization, processability is excellent, and narrow molecular weight distribution which is equal or higher than a modified conjugated diene-based polymer prepared by batch-type polymerization is achieved. Accordingly, physical properties such as tensile properties are good, and viscoelasticity properties are excellent.

### BRIEF DESCRIPTION OF THE DRAWINGS

The accompanying drawings in the present disclosure illustrate preferred embodiments of the present invention and are included together with the above description to provide a further understanding of the inventive concept. The inventive concept, however, should not be construed as limited to the accompanying drawings.
FIG. 1 illustrates a molecular weight distribution curve by gel permeation chromatography (GPC) of a modified conjugated diene-based polymer of Example 1 according to an embodiment of the present invention.
FIG. 2 illustrates a molecular weight distribution curve by gel permeation chromatography (GPC) of a modified conjugated diene-based polymer of Comparative Example 2 according to an embodiment of the present invention.

### BEST MODE FOR CARRYING OUT THE INVENTION

Hereinafter, the present invention will be described in more detail in order to assist the understanding of the present invention.

It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

The modified conjugated diene-based polymer according to the present invention has a unimodal shape of gel permeation chromatography (GPC) molecular weight distribution curve, molecular weight distribution (PDI;MWD) of less than 1.7, and a Si content of 100 ppm or more based on weight, and may include a repeating unit derived from an aromatic vinyl monomer in an amount from 15 wt% to less than 30 wt%.

The modified conjugated diene-based polymer of the invention includes a repeating unit derived from a conjugated diene-based monomer and a functional group derived from a modifier. The repeating unit derived from a conjugated diene-based monomer may mean a repeating unit formed by a conjugated diene-based monomer during polymerization, and the functional group derived from a modifier may mean a functional group derived from a modifier which is present at one terminal of an active polymer via the reaction or coupling between the active polymer and the modifier.

According to an embodiment of the present invention, the conjugated diene-based monomer may be one or more selected from the group consisting of 1,3-butadiene, 2,3-dimethyl-1,3-butadiene, piperylene, 3-butyl-1,3-octadiene, isoprene, 2-phenyl-1,3-butadiene, and 2-halo-1,3-butadiene (halo means a halogen atom).

Meanwhile, the modified conjugated diene-based polymer may be a copolymer including a repeating unit derived from an aromatic vinyl monomer and may include the repeating unit derived from an aromatic vinyl monomer in an amount from 15 wt% to less than 30 wt%. Within this range, effect of excellent balance between rolling resistance and wet skid resistance may be achieved.

The aromatic vinyl monomer may include, for example, one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, 3-(2-pyrrolidino ethyl) styrene, 4-(2-pyrrolidino ethyl) styrene, and 3-(2-pyrrolidino-1-methyl ethyl)-α-methylstyrene.

In another embodiment, the modified conjugated diene-based polymer may be a copolymer which further includes a repeating unit derived from a diene-based monomer of 1 to 10 carbon atoms together with the repeating unit derived from the conjugated diene-based monomer. The repeating unit derived from the diene-based monomer may be a repeating unit derived from a diene-based monomer which is different from the conjugated diene-based monomer, and the diene-based monomer which is different from the conjugated diene-based monomer may be, for example, 1,2-butadiene. If the modified conjugated diene-based polymer is a copolymer further including a diene-based monomer, the modified conjugated diene-based polymer may include the repeating unit derived from the diene-based monomer in an amount of greater than 0 wt% to 1 wt%, greater than 0 wt% to 0.1 wt%, greater than 0 wt% to 0.01 wt%, or greater than 0 wt% to 0.001 wt%. Within this range, effect of preventing gel formation may be achieved.

According to an embodiment of the present invention, the copolymer may be a random copolymer, and in this case, effect of excellent balance between each of physical properties may be achieved. The random copolymer may mean the arrangement of repeating units forming a copolymer in disorder.

The modified conjugated diene-based polymer according to an embodiment of the present invention may have a number average molecular weight (Mn) of 1,000 g/mol to 2,000,000 g/mol, 10,000 g/mol to 1,000,000 g/mol, or 100,000 g/mol to 800,000 g/mol, and a weight average molecular weight (Mw) of 1,000 g/mol to 3,000,000 g/mol, 10,000 g/mol to 2,000,000 g/mol, or 100,000 g/mol to 2,000,000 g/mol, and within these ranges, effects of excellent rolling resistance and wet skid resistance may be achieved. In another embodiment, the modified conjugated diene-based polymer may have molecular weight distribution (PDI; MWD; Mw/Mn) of less than 1.7, 1.0 to less than 1.7, or 1.1 to less than 1.7, and within this range, effects of excellent tensile properties, viscoelasticity properties, and balance between each of physical properties may be achieved. At the same time, the modified conjugated diene-based polymer has a unimodal shape of gel permeation chromatography (GPC) molecular weight distribution curve, which corresponds to molecular weight distribution shown by a polymer prepared by continuous-type polymerization and may indicate that the modified conjugated diene-based polymer has uniform properties. That is, the modified conjugated diene-based polymer according to an embodiment of the present invention is prepared by continuous-type polymerization, and thus, has a unimodal shape molecular weight distribution curve and molecular weight distribution of less than 1.7.

In another embodiment, the modified conjugated diene-based polymer may have a Si content of 100 ppm or more, 100 ppm to 10,000 ppm, or 100 ppm to 5,000 ppm based on weight, and within this range, a rubber composition including the modified conjugated diene-based polymer shows excellent mechanical properties such as tensile properties and viscoelasticity properties. The Si content may mean the amount of Si atoms present in the modified conjugated diene-based polymer. Meanwhile, the Si atom may be derived from a functional group derived from a modifier.

The Si content may be measured via, for example, an ICP analysis method, and may be measured by the ICP analysis method using an inductively coupled plasma optical emission spectroscopy (ICP-OES; Optima 7300DV). If the inductively coupled plasma optical emission spectroscopy is used, measurement may be performed by adding about 0.7 g of a specimen to a platinum (Pt) crucible, adding about 1 ml of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:
1) step 1: initial temp 0°C, rate (temp/hr) 180°C/hr, temp (holdtime) 180°C (1hr),
2) step 2: initial temp 180°C, rate (temp/hr) 85°C/hr, temp (holdtime) 370°C (2hr), and
3) step 3: initial temp 370°C, rate (temp/hr) 47°C/hr, temp (holdtime) 510°C (3hr),
adding 1 ml of concentrated nitric acid (48 wt%) and 20 µl of concentrated hydrofluoric acid (50 wt%) to a residue, sealing the platinum crucible and shaking for 30 minutes or more, adding 1 ml of boric acid to the specimen, storing at 0°C for 2 hours or more, diluting in 30 ml ultrapure water, and performing incineration.

In another embodiment, the modified conjugated diene-based polymer has a unimodal shape of a polymer component having a molecular weight of 100,000 g/mol or more in polystyrene standard conversion molecular weight by gel permeation chromatography, molecular weight distribution (PDI; MWD) of 2.0 or less, a number average molecular weight (Mn) of 250,000 g/mol to 700,000 g/mol, a vinyl content of a butadiene unit of 20 mol% to 80 mol%, a Si content of 100 ppm or more based on weight, and the content of a polymer component having a functional group of 50 wt% or more, and may include a repeating unit derived from an aromatic vinyl monomer in an amount of greater than 0 wt% and less than 15 wt%.

The modified conjugated diene-based polymer has a mooney viscosity of 30 or more, 40 to 150, or 40 to 140 at 100°C, and within this range, effects of excellent processability and productivity may be achieved.

In addition, the modified conjugated diene-based polymer may have a vinyl content of 5 wt% or more, 10 wt% or less, or 10 wt% to 60 wt%. Here, the vinyl content may mean the amount of not 1,4-added but 1,2-added conjugated diene-based monomer based on 100 wt% of a conjugated diene-based copolymer composed of a monomer having a vinyl group, and an aromatic vinyl-based monomer.

The modifier according to the present invention may be a modifier for modifying the terminals of a conjugated diene-based polymer, and particularly, may be a modifier having an affinity with silica. The modifier having an affinity with silica may mean a modifier containing a functional group having an affinity with silica in a compound used as a modifier, and the functional group having an affinity with silica may mean a functional group having excellent an affinity with a filler, particularly, a silica-based filler, and is capable of making interaction between the silica-based filler and the functional group derived from the modifier.

The modifier may be, for example, an alkoxysilane-based modifier, particularly, an alkoxysilane-based modifier containing one or more heteroatoms including a nitrogen atom, an oxygen atom, and a sulfur atom. If the alkoxysilane-based modifier is used, via substitution reaction between an anionic active part positioned at one terminal of an active polymer and an alkoxy group of the alkoxysilane-based modifier, the one terminal of the active polymer may be modified in a bonding state with a silyl group, and accordingly, the affinity of a functional group derived from the modifier present at the one terminal of a modified conjugated diene-based polymer with an inorganic filler may be increased, and the mechanical properties of a rubber composition including the modified conjugated diene-based polymer may be improved. Also, if the alkoxysilane-based modifier contains a nitrogen atom, additional effects of increasing physical properties due to the nitrogen atom may be anticipated in addition to the effects derived from the silyl group.

According to the present invention, the modifier is a compound represented by a formula selected from following Formula 1, Formula 2, Formula 3, Formula 4a, Formula 5, Formula 6, and Formula 7:

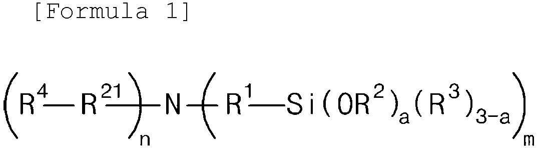

According to the disclosure, in Formula 1, R¹ may be a single bond, or an alkylene group of 1 to 10 carbon atoms, R² and R³ may be each independently an alkyl group of 1 to 10 carbon atoms, R⁴ may be hydrogen, an alkyl group of 1 to 10 carbon atoms, a divalent, trivalent, or tetravalent alkylsilyl group which is substituted with an alkyl group of 1 to 10 carbon atoms, or a heterocycle of 2 to 10 carbon atoms, R²¹ may be a single bond, an alkylene group of 1 to 10 carbon atoms, or -[R⁴²O]ⱼ-, where R⁴² may be an alkylene group of 1 to 10 carbon atoms, a and m may be each independently an integer selected from 1 to 3, n may be an integer of 0, 1 or 2, and j may be an integer selected from 1 to 30.

According to the invention, in Formula 1, R¹ is a single bond, or an alkylene group of 1 to 5 carbon atoms, R² and R³ are each independently hydrogen, an alkyl group of 1 to 5 carbon atoms, R⁴ is hydrogen, an alkyl group of 1 to 5 carbon atoms, a tetravalent alkylsilyl group which is substituted with an alkyl group of 1 to 5 carbon atoms, or a heterocycle of 2 to 5 carbon atoms, R²¹ is -[R⁴²O]ⱼ-, where R⁴² is an alkylene group of 1 to 5 carbon atoms, a is an integer of 2 or 3, m is an integer selected from 1 to 3, n is an integer of 0, 1 or 2, where m+n=3 is satisfied, and if n is 2, a plurality of R⁹ groups are the same or different, and j is an integer selected from 1 to 10.

In Formula 1, if R⁴ is a heterocycle, the heterocycle may be unsubstituted or substituted with a trisubstituted alkoxysilyl group, and if the heterocycle is substituted with a trisubstituted alkoxysilyl group, the trisubstituted alkoxysilyl group may be substituted via the connection with the heterocycle by an alkylene group of 1 to 10 carbon atoms, and the trisubstituted alkoxysilyl group may mean an alkoxysilyl group which is substituted with an alkoxy group of 1 to 10 carbon atoms.

In a more particular embodiment, the compound represented by Formula 1 may be one selected from the group consisting of N,N-bis(3-(dimethoxy(methyl)silyl)propyl)-methyl-1-amine, N,N-bis(3-(diethoxy(methyl)silyl)propyl)-methyl-1-amine, N,N-bis(3-(trimethoxysilyl)propyl)-methyl-1-amine, N,N-bis(3-(triethoxysilyl)propyl)-methyl-1-amine, N,N-diethyl-3-(trimethoxysilyl)propan-1-amine, N,N-diethyl-3-(triethoxysilyl)propan-1-amine, tri(trimethoxysilyl)amine, tri-(3-(trimethoxysilyl)propyl)amine, N,N-bis(3-(diethoxy(methyl)silyl)propyl)-1,1,1-trimethlysilanamine, N,N-bis(3-(1H-imidazol-1-yl)propyl)-(triethoxysilyl)methan-1-amine, N-(3-(1H-1,2,4-triazole-1-yl)propyl)-3-(trimethoxysilyl)-N-(3-trimethoxysilyl)propyl)propan-1-amine, 3-(trimethoxysilyl)-N-(3-(trimethoxysilyl)propyl)-N-(3-(1-(3-(trimehtoxysilyl)propyl)-1H-1,2,4-triazol-3-yl)propyl)propan-1-amine, N,N-bis(2-(2-methoxyethoxy)ethyl)-3-(triethoxysilyl)propna-1-amine, N,N-bis(3-(triethoxysilyl)propyl)-2,5,8,11,14-pentaoxahexadecan-16-amine, N-(2,5,8,11,14-pentaoxahexadecan-16-yl)-N-(3-(triethoxysilyl)propyl)-2,5,8,11,14-pentaoxahexadecan-16-amine and N-(3,6,9,12-tetraoxahexadecyl)-N-(3-(triethoxysilyl)propyl)-3,6,9,12-tetraoxahexadecan-1-amine.

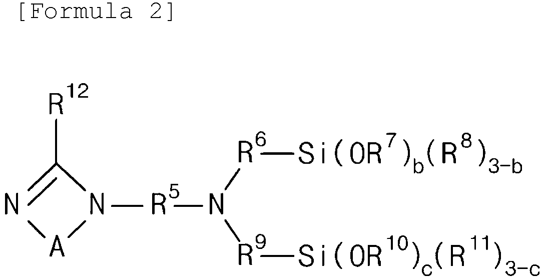

In Formula 2, R⁵, R⁶ and R⁹ are each independently an alkylene group of 1 to 10 carbon atoms, R⁷, R⁸, R¹⁰ and R¹¹ are each independently an alkyl group of 1 to 10 carbon atoms, R¹² is hydrogen or an alkyl group of 1 to 10 carbon atoms, b and c are each independently 0, 1, 2 or 3, where b+c≥1 is satisfied, and A is 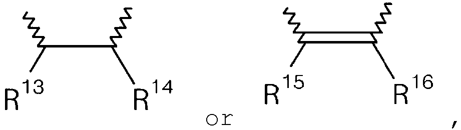 where R¹³, R¹⁴, R¹⁵ and R¹⁶ are each independently hydrogen or an alkyl group of 1 to 10 carbon atoms.

In a particular embodiment, the compound represented by Formula 2 may be one selected from the group consisting of N-(3-(1H-imidazol-1-yl)propyl)-3-(triethoxysilyl)-N-(3-(triethoxysilyl)propyl)propan-1-amine and 3-(4,5-dihydro-1H-imidazol-1-yl)-N,N-bis(3-(triethoxysilyl)propyl)propan-1-amine.

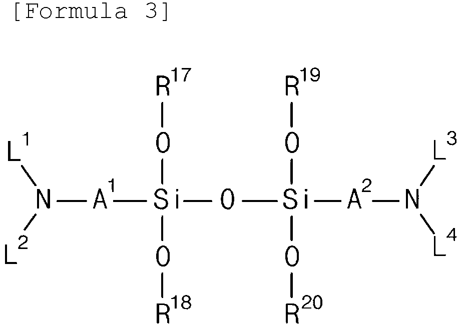

In Formula 3, A¹ and A² are each independently a divalent hydrocarbon group of 1 to 20 carbon atoms, which contains an oxygen atom or not, R¹⁷ to R²⁰ are each independently a monovalent hydrocarbon group of 1 to 20 carbon atoms, L¹ to L⁴ are each independently a divalent, trivalent, or tetravalent alkylsilyl group which is substituted with an alkyl group of 1 to 10 carbon atoms, or a monovalent hydrocarbon group of 1 to 20 carbon atoms, where L¹ and L², and L³ and L⁴ are combined with each other to form a ring of 1 to 5 carbon atoms, and if L¹ and L², and L³ and L⁴ are combined with each other to form a ring, the ring thus formed includes one to three heteroatoms selected from the group consisting of N, O and S.

In a particular embodiment, in Formula 3, A¹ and A² may be each independently an alkylene group of 1 to 10 carbon atoms, R¹⁷ to R²⁰ may be each independently an alkyl group of 1 to 10 carbon atoms, L¹ to L⁴ may be each independently a tetravalent alkylsilyl group which is substituted with an alkyl group of 1 to 5 carbon atoms, or an alkyl group of 1 to 10 carbon atoms, where L¹ and L², and L³ and L⁴ may be combined with each other to form a ring of 1 to 3 carbon atoms, and if L¹ and L², and L³ and L⁴ are combined with each other to form a ring, the ring thus formed may include one to three heteroatoms selected from the group consisting of N, O and S.

In a more particular embodiment, the compound represented by Formula 3 may be one selected from the group consisting of 3,3'-(1,1,3,3-tetramethoxydisiloxane-1,3-diyl)bis(N,N-dimethylpropan-1-amine, 3,3'-(1,1,3,3-tetraethoxydisiloxane-1,3-diyl)bis(N,N-dimethylpropan-1-amine), 3,3'-(1,1,3,3-tetrapropoxydisiloxane-1,3-diyl)bis(N,N-dimethylpropan-1-amine), 3,3'-(1,1,3,3-tetramethoxydisiloxane-1,3-diyl)bis(N,N-diethylpropan-1-amine), 3,3'-(1,1,3,3-tetramethoxydisiloxane-1,3-diyl)bis(N,N-dimpropylpropan-1-amine), 3,3'-(1,1,3,3-tetraethoxydisiloxane-1,3-diyl)bis(N,N-diethylpropan-1-amine), 3,3'-(1,1,3,3-tetrapropoxydisiloxane-1,3-diyl)bis(N,N-diethylpropan-1-amine), 3,3'-(1,1,3,3-tetraethoxydisiloxane-1,3-diyl)bis(N,N-dipropylpropan-1-amine), 3,3'-(1,1,3,3-tetrapropoxydisiloxane-1,3-diyl)bis(N,N-dipropylpropan-1-amine), 3,3'-(1,1,3,3-tetramethoxydisiloxane-1,3-diyl)bis(N,N-diethylmethan-1-amine), 3,3'-(1,1,3,3-tetraethoxydisiloxane-1,3-diyl)bis(N,N-diethylmethan-1-amine), 3,3'-(1,1,3,3-tetrapropoxydisiloxane-1,3-diyl)bis(N,N-diethylmethan-1-amine), 3,3'-(1,1,3,3-tetramethoxydisiloxane-1,3-diyl)bis(N,N-dimethylmethan-1-amine), 3,3'-(1,1,3,3-tetramethoxydisiloxane-1,3-diyl)bis(N,N-dipropylmethan-1-amine), 3,3'-(1,1,3,3-tetrapropoxydisiloxane-1,3-diyl)bis(N,N-dimethylmethan-1-amine), 3,3'-(1,1,3,3-tetrapropoxydisiloxane-1,3-diyl)bis(N,N-dipropylmethan-1-amine), 3,3'-(1,1,3,3-tetraethoxydisiloxane-1,3-diyl)bis(N,N-dimethylmethan-1-amine), 3,3'-(1,1,3,3-tetraethoxydisiloxane-1,3-diyl)bis(N,N-dipropylmethan-1-amine), N,N'-((1,1,3,3-tetramethoxydisiloxane-1,3-diyl)bis(propan-3,1-diyl))bis(1,1,1-trimethyl-N-(trimethylsilyl)silanamine, N,N'-((1,1,3,3-tetraethoxydisiloxane-1,3-diyl)bis(propan-3,1-diyl))bis(1,1,1-trimethyl-N-(trimethylsilyl)silanamine, N,N'-((1,1,3,3-tetrapropoxydisiloxane-1,3-diyl)bis(propan-3,1-diyl))bis(1,1,1-trimethyl-N-(trimethylsilyl)silanamine, N,N'-((1,1,3,3-tetramethoxydisiloxane-1,3-diyl)bis(propan-3,1-diyl))bis(1,1,1-trimethyl-N-phenylsilanamine, N,N'-((1,1,3,3-tetraethoxydisiloxane-1,3-diyl)bis(propan-3,1-diyl))bis(1,1,1-trimethyl-N-phenylsilanamine, N,N'-((1,1,3,3-tetrapropoxydisiloxane-1,3-diyl)bis(propan-3,1-diyl))bis(1,1,1-trimethyl-N-phenylsilanamine, 1,3-bis(3-(1H-imidazol-1-yl)propyl)-1,1,3,3-tetramethoxydisiloxane, 1,3-bis(3-(1H-imidazol-1-yl)propyl)-1,1,3,3-tetraethoxydisiloxane, and 1,3-bis(3-(1H-imidazol-1-yl)propyl)-1,1,3,3-tetrapropoxydisiloxane.

According to the disclosure, the modifier may include a compound represented by the following Formula 4:

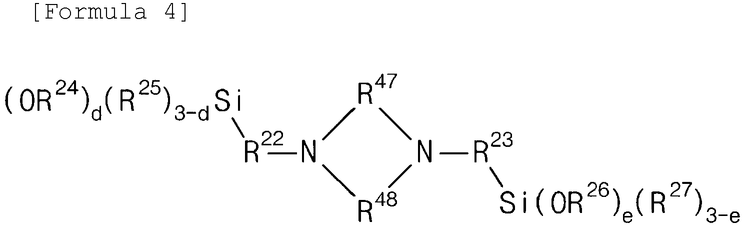

In Formula 4, R²² and R²³ may be each independently an alkylene group of 1 to 20 carbon atoms, or -R²¹[OR²¹]_{f}-, R²⁴ to R²⁷ may be each independently an alkyl group of 1 to 20 carbon atoms or an aryl group of 6 to 20 carbon atoms, R²⁸ and R²⁹ may be each independently an alkylene group of 1 to 20 carbon atoms, R⁴⁷ and R⁴⁸ may be each independently a divalent hydrocarbon group of 1 to 6 carbon atoms, d and e may be each independently 0, or an integer selected from 1 to 3, where d+e may be an integer of 1 or more, and f may be an integer of 1 to 30.

Particularly, in Formula 4, R²² and R²³ may be each independently an alkylene group of 1 to 10 carbon atoms, or - R²⁸[OR²⁹]ᵣ-, R²⁴ to R²⁷ may be each independently an alkyl group of 1 to 10 carbon atoms, R²⁸ and R²⁹ may be each independently an alkylene group of 1 to 10 carbon atoms, d and e may be each independently 0, or an integer selected from 1 to 3, where d+e may be an integer of 1 or more, and f may be an integer of 1 to 30.

According to the invention, the compound represented by Formula 4 is a compound represented by the following Formula 4a. According to the disclosure, the compound represented by Formula 4 may be Formula 4b, or Formula 4c: 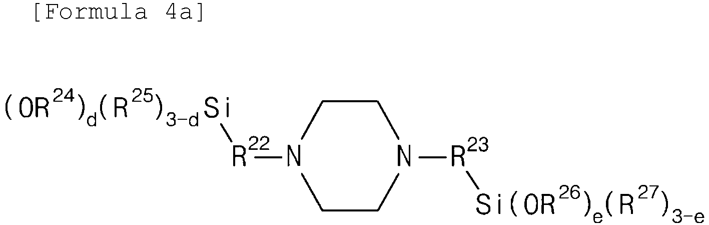 wherein R²² and R²³ are each independently an alkylene group of 1 to 10 carbon atoms, or -R²⁸[OR²⁹]_{f}, R²⁴ to R²⁷ are each independently an alkyl group of 1 to 10 carbon atoms, R²⁸ and R²⁹ are each independently an alkylene group of 1 to 10 carbon atoms, d and e are each independently 0, or an integer selected from 1 to 3, where d+e is an integer of 1 or more, and f is an integer of 1 to 30.

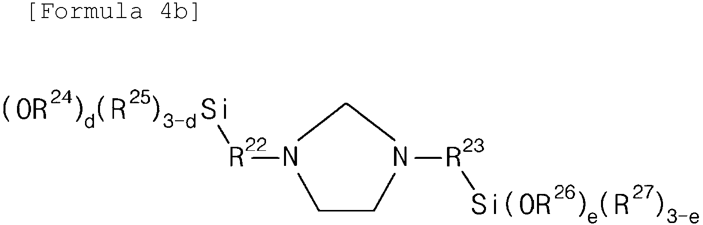

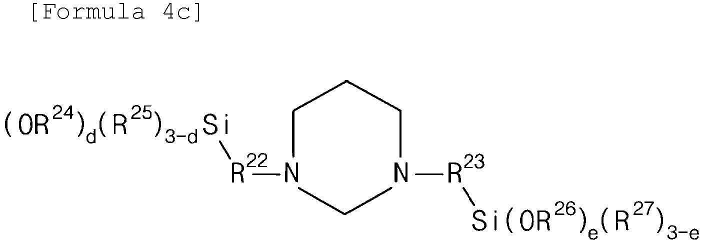

In Formula 4a, Formula 4b and Formula 4c, R²² to R²⁷, e and e are the same as described above.

In a more particular embodiment, the compound represented by Formula 4 may be one selected from the group consisting of 1,4-bis(3-(3-(triethoxysilyl)propoxy)propyl)piperazine, 1,4-bis(3-(triethoxysilyl)propyl)piperazine, 1,4-bis(3-(trimethoxysilyl)propyl)piperazine, 1,4-bis(3-(dimethoxymethylsilyl)propyl)piperazine, 1-(3-(ethoxydimethlylsilyl)propyl)-4-(3-(triethoxysilyl)propyl)piperazine, 1-(3-(ethoxydimethyl)propyl)-4-(3-(triethoxysilyl)methyl)piperazine, 1-(3-(ethoxydimethyl)methyl)-4-(3-(triethoxysilyl)propyl)piperazine, 1,3-bis(3-(triethoxysilyl)propyl)imidazolidine, 1,3-bis(3-(dimethoxyethylsilyl)propyl)imidazolidine, 1,3-bis(3-(trimethoxysilyl)propyl)hexahydropyrimidine, 1,3-bis(3-(triethoxysilyl)propyl)hexahydropyrimidine and 1,3-bis(3-(tributoxysilyl)propyl)-1,2,3,4-tetrahydropyrimidine.

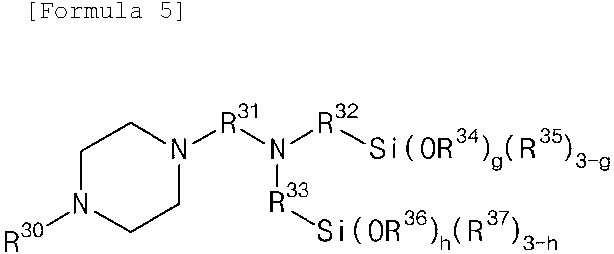

In Formula 5, R³⁰ is a monovalent hydrocarbon group of 1 to 30 carbon atoms, R³¹ to R³³ are each independently an alkylene group of 1 to 10 carbon atoms, R³⁴ to R³⁷ are each independently an alkyl group of 1 to 10 carbon atoms, and g and h are each independently 0, or an integer selected from 1 to 3, where g+h is an integer of 1 or more.

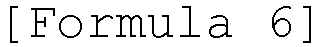

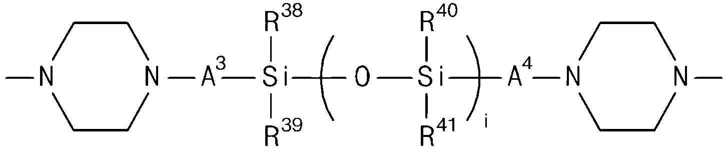

In Formula 6, A³ and A⁴ are each independently an alkylene group of 1 to 10 carbon atoms, R³¹ to R⁴¹ are each independently an alkyl group of 1 to 10 carbon atoms, or an alkoxy group of 1 to 10 carbon atoms, and i is an integer selected from 1 to 30.

In another embodiment, the modifier may include one or more selected from the group consisting of 3,4-bis(2-methoxyethoxy)-N-(4-(trimethylsilyl)butyl)aniline, N,N-diethyl-3-(7-methyl-3,6,8,11-tetraoxa-7-silatridecan-7-yl)propan-1-amine, 2,4-bis(2-methoxyethoxy)-6-((trimethylsilyl)methyl)-1,3,5-triazine and 3,14-dimethoxy-3,8,8,13-tetramethyl-2,14-dioxa-7,9-dithia-3,8,13-trisilapentadecane.

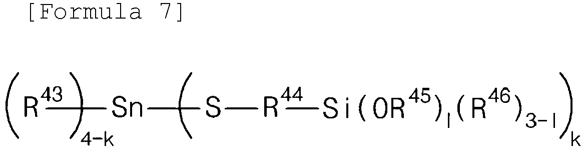

In Formula 7, R⁴³, R⁴⁵ and R⁴⁶ are each independently an alkyl group of 1 to 10 carbon atoms, R⁴⁴ is an alkylene group of 1 to 10 carbon atoms, and k is an integer selected from 1 to 4.

In a more particular embodiment, the compound represented by Formula 7 may be one selected from the group consisting of 8,8-dibutyl-3,13-dimethoxy-3,13-dimethyl-2,14-dioxa-7,9-dithia-3,13-disila-8-stannapentadecane, 8,8-dimetyl-3,13-dimethoxy-3,13-dimethyl-2,14-dioxa-7,9-dithia-3,13-disila-8-stannapentadecane, 8,8-dibutyl-3,3,13,13-tetramethoxy-2,14-dioxa-7,9-dithia-3,13-disila-8-stannapentadecane and 8-butyl-3,3,13,13-tetramethoxy-8-((3-(trimehtoxysilyl)propyl)thio)-2,14-dioxa-7,9-dithia-3,13-disila-8-stannapentadecane.

In the present invention, the term "monovalent hydrocarbon group" may mean a monovalent atomic group in which carbon and hydrogen are bonded, such as a monovalent alkyl group, alkenyl group, alkynyl group, cycloalkyl group, cycloalkyl group including one or more unsaturated bonds, and aryl group. The minimum carbon number of a substituent represented by the monovalent hydrocarbon may be determined according to the kind of each substituent.

In the present invention, the term "divalent hydrocarbon group" may mean a divalent atomic group in which carbon and hydrogen are bonded, such as a divalent alkylene group, alkenylene group, alkynylene group, cycloalkylene group, cycloalkylene group including one or more unsaturated bonds and arylene group. The minimum carbon number of a substituent represented by the divalent hydrocarbon may be determined according to the kind of each substituent.

In the present invention, the term "alkyl group" may mean a monovalent aliphatic saturated hydrocarbon and may include both linear alkyl such as methyl, ethyl, propyl and butyl, and branched alkyl such as isopropyl, sec-butyl, tert-butyl and neo-pentyl.

In the present invention, the term "alkylene group" may mean a divalent aliphatic saturated hydrocarbon such as methylene, ethylene, propylene and butylene.

In the present invention, the term "alkenyl group" may mean an alkyl group including one or two or more double bonds.

In the present invention, the term "alkynyl group" may mean an alkyl group including one or two or more triple bonds.

In the present invention, the term "cycloalkyl group" may include cyclic saturated hydrocarbon, or all cyclic unsaturated hydrocarbon including one or two or more unsaturated bonds.

In the present invention, the term "aryl group" may mean cyclic aromatic hydrocarbon, and may include both monocyclic aromatic hydrocarbon in which one ring is formed, and polycyclic aromatic hydrocarbon in which two or more rings are combined.

In the present invention, the term "heterocyclic group" may include both a cycloalkyl group and an aryl group, in which carbon atoms in the cycloalkyl group or the aryl group are substituted with one or more heteroatoms.

In order to prepare the modified conjugated diene-based polymer, the present invention provides a method of preparing a modified conjugated diene-based polymer. The method of preparing a modified conjugated diene-based polymer may include a step of polymerizing a conjugated diene-based monomer, or an aromatic vinyl-based monomer and a conjugated diene-based monomer, in the presence of an organometallic compound in a hydrocarbon solvent to prepare an active polymer which is coupled with an organometal (S1); and a step of reacting or coupling the active polymer prepared in step (S1) with a modifier (S2), wherein the step (S1) is continuously performed in two or more polymerization reactors, and a polymerization conversion ratio in a first reactor among the polymerization reactors may be 50% or less.

The hydrocarbon solvent is not specifically limited, but may be, for example, one or more selected from the group consisting of n-pentane, n-hexane, n-heptane, isooctane, cyclohexane, toluene, benzene and xylene.

According to an embodiment of the present invention, the organometallic compound may be used in 0.01 mmol to 10 mmol, 0.05 mmol to 5 mmol, 0.1 mmol to 2 mmol, 0.1 mmol to 1 mmol, or 0.15 to 0.8 mmol based on total 100 g of the monomer. The organometallic compound may be, for example, one or more selected from the group consisting of methyllithium, ethyllithium, propyllithium, isopropyllithium, n-butyllithium, s-butyllithium, t-butyllithium, hexyllithium, n-decyllithium, t-octyllithium, phenyllithium, 1-naphthyl lithium, n-eicosyl lithium, 4-butylphenyl lithium, 4-tolyl lithium, cyclohexyl lithium, 3,5-di-n-heptylcyclohexyl lithium, 4-cyclopentyl lithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide, and lithium isopropylamide.

The polymerization of step (S1) may be, for example, an anionic polymerization, and particularly, a living anionic polymerization by which an anionic active part is formed at the polymerization terminal through a propagation reaction by anions. In addition, the polymerization of step (S1) may be a polymerization with heating, an isothermal polymerization, or a polymerization at a constant temperature (adiabatic polymerization). Here, the polymerization at a constant temperature means a polymerization method including a step of polymerizing using self-generated heat of reaction without optionally applying heat after adding an organometallic compound, and the polymerization with heating means a polymerization method including injecting the organometallic compound and then, increasing the temperature by optionally applying heat. The isothermal polymerization means a polymerization method by which the temperature of a polymer is kept constant by increasing heat by applying heat or taking heat after adding the organometallic compound.

In addition, according to an embodiment of the present invention, the polymerization of step (S1) may be performed by further adding a diene-based compound of 1 to 10 carbon atoms in addition to the conjugated diene-based monomer, and in this case, effect of preventing the formation of gel on the wall of a reactor during operation for a long time may be achieved. The diene-based compound may include, for example, 1,2-butadiene.

The polymerization of step (S1) may be conducted in a temperature range of 80°C or less, -20°C to 80°C, 0°C to 80°C, 0°C to 70°C, or 10°C to 70°C. Within the range, the molecular weight distribution of a polymer is controlled narrow, and the improving effect of physical properties is excellent.

The active polymer prepared by step (S1) may mean a polymer in which a polymer anion and an organometallic cation are coupled.

According to an embodiment of the present invention, the active polymer prepared by the polymerization of step (S1) may be a random copolymer, and in this case, effect of excellent balance between each of physical properties may be achieved. The random copolymer may mean the arrangement of repeating units forming a copolymer in disorder.

According to an embodiment of the present invention, the method for preparing a modified conjugated diene-based polymer may be performed in a plurality of reactors including two or more polymerization reactors and a modification reactor by a continuous type polymerization method. In a particular embodiment, step (S1) may be performed continuously in two or more polymerization reactors including a first reactor, and the number of the polymerization reactor may be flexibly determined according to reaction conditions and environment. The continuous type polymerization method may mean reaction processes of continuously supplying reactants to a reactor and continuously discharging reaction products thus produced. By the continuous type polymerization method, productivity and processability may be excellent, and effect of excellent uniformity of the polymer thus prepared may be achieved.

In addition, according to an embodiment of the present invention, if the active polymer is continuously prepared in the polymerization reactor, a polymerization conversion ratio in the first reactor may be 50% or less, from 10% to 50%, or from 20% to 50%, and within this range, side reactions generated while forming a polymer after initiating polymerization reaction may be restrained and a polymer with a linear structure may be induced during polymerization. Thus, the molecular weight distribution of the polymer may be controlled narrow, and effect of excellent improvement of physical properties may be achieved.

In this case, the polymerization conversion ratio may be controlled according to the reaction temperature, the residence time in the reactor, etc.

The polymerization conversion ratio may be determined, for example, by measuring a solid concentration in a polymer solution phase including the polymer during polymerizing a polymer. In a particular embodiment, in order to secure the polymer solution, a cylinder type container is installed at the outlet of each polymerization reactor to fill a certain amount of the polymer solution in the cylinder type container. Then, the cylinder type container is separated from the reactor, the weight (A) of the cylinder filled with the polymer solution is measured, the polymer solution filled in the cylinder type container is transported to an aluminum container, for example, an aluminum dish, the weight (B) of the cylinder type container from which the polymer solution is removed is measured, the aluminum container containing the polymer solution is dried in an oven of 140°C for 30 minutes, the weight (C) of a dried polymer is measured, and calculation is performed according to the following Mathematical Equation 1: [Mathematical Equation 1] $Polymer conversion ratio \left(%\right) = \frac{Weight \left(C\right)}{\left[\left(Weight \left(A\right)-Weight \left(B\right)\right)\times total solid content of each reactor \left(wt%, TSC\right)\right]}$

Meanwhile, the polymer polymerized in the first reactor may be transported to polymerization reactors before a modification reactor in order, and polymerization may be performed until the final polymerization conversion ratio becomes 95% or more. After performing the polymerization in the first reactor, the polymerization conversion ratio of the second reactor, or each reactor from the second reactor to the polymerization reactor before the modification reactor may be appropriately controlled to control molecular weight distribution.

Meanwhile, in step (S1), during preparing an active polymer, the residence time of a polymer in the first reactor may be from 1 minute to 70 minutes, from 1 minute to 50 minutes, or from 5 minutes to 40 minutes, and within this range, the control of a polymerization conversion ratio is easy, and thus, the molecular weight distribution of a polymer is possibly controlled narrow, and effect of improving physical properties may be excellent.

The term "polymer" used in the present invention may mean an intermediate of a polymer type, which is under polymerization in each reactor during performing step (S1) or may mean a polymer with a polymerization conversion ratio of less than 99% under polymerization in a reactor, after finishing step (S1) or step (S2) and prior to obtaining an active polymer or a modified conjugated diene-based polymer.

According to an embodiment of the present invention, the molecular weight distribution (PDI, polydispersed index; MWD, Mw/Mn) may be less than 1.5, from 1.0 to less than 1.5, or from 1.1 to less than 1.5, and within this range, the molecular weight distribution of a modified conjugated diene-based polymer which is prepared via a modification reaction or coupling with a modifier is narrow, and improving effect of physical properties may be excellent.

Meanwhile, the polymerization of step (S1) may be performed by including a polar additive, and the polar additive may be added in a ratio of 0.001 g to 50 g, 0.001 g to 10 g, 0.005 g to 5 g, or 0.005 g to 4 g based on total 100 g of the monomer. In another embodiment, the polar additive may be added in a ratio of 0.001 mol to 100 mol, or 0.01 mol to 10 mol based on total 1 mmol of the organometallic compound.

The polar additive may be, for example, one or more selected from the group consisting of tetrahydrofuran, 2,2-di(2-tetrahydrofuryl)propan, diethyl ether, cycloamyl ether, dipropyl ether, ethylene methyl ether, ethylene dimethyl ether, diethyl glycol, dimethyl ether, tert-butoxy ethoxy ethane, bis(3-dimethylaminoethyl)ether, (dimethylaminoethyl) ethyl ether, trimethylamine, triethylamine, tripropylamine, N,N,N' ,N'-tetramethylethylenediamine, sodium metholate, and 2-ethyl tetrahydrofufuryl ether, and may preferably be triethylamine, N,N,N',N'-tetramethyleneethylenediamine, sodium metholate, or 2-ethyl tetrahydrofufuryl ether. If the polar additive is included, and if a conjugated diene-based monomer, or a conjugated diene-based monomer and an aromatic vinyl-based monomer are copolymerized, the difference of their reaction rates may be compensated, and effect of inducing easy formation of a random copolymer may be achieved.

According to an embodiment of the present invention, the reaction or coupling of step (S2) may be performed in a modification reactor, and in this case, the modifier may be used in an amount of 0.01 mmol to 10 mmol based on total 100 g of the monomer. In another embodiment, the modifier may be used in a molar ratio of 1:0.1 to 10, 1:0.1 to 5, or 1:0.1 to 1:3, based on 1 mol of the organometallic compound of step (S1).

In addition, according to an embodiment of the present invention, the modifier may be injected into a modification reactor, and step (S2) may be conducted in the modification reactor. In another embodiment, the modifier may be injected into a transporting part for transporting the active polymer prepared in step (S1) to a modification reactor for conducting step (S2), and the reaction or coupling may be performed by the mixing of the active polymer and the modifier in the transporting part.

According to the present invention, a rubber composition including the modified conjugated diene-based polymer is provided.

The rubber composition may include the modified conjugated diene-based polymer in an amount of 10 wt% or more, 10 wt% to 100 wt%, or 20 wt% to 90 wt%, and within this range, mechanical properties such as tensile strength and abrasion resistance are excellent, and effect of excellent balance between each of physical properties may be achieved.

In addition, the rubber composition may further include other rubber component, if needed, in addition to the modified conjugated diene-based polymer, and in this case, the rubber component may be included in an amount of 90 wt% or less based on the total amount of the rubber composition. In a particular embodiment, the rubber component may be included in an amount of 1 part by weight to 900 parts by weight based on 100 parts by weight of the modified conjugated diene-based copolymer.

The rubber component may be, for example, a natural rubber or a synthetic rubber, and may particularly be a natural rubber (NR) including cis-1,4-polyisoprene; a modified natural rubber which is obtained by modifying or purifying a common natural rubber, such as an epoxidized natural rubber (ENR), a deproteinized natural rubber (DPNR), and a hydrogenated natural rubber; and a synthetic rubber such as a styrene-butadiene copolymer (SBR), a polybutadiene (BR), a polyisoprene (IR), a butyl rubber (IIR), an ethylene-propylene copolymer, a polyisobutylene-co-isoprene, a neoprene, a poly (ethylene-co-propylene), a poly(styrene-co-butadiene), a poly(styrene-co-isoprene), a poly(styrene-co-isoprene-co-butadiene), a poly(isoprene-co-butadiene), a poly(ethylene-co-propylene-co-diene), a polysulfide rubber, an acryl rubber, a urethane rubber, a silicone rubber, an epichlorohydrin rubber, a butyl rubber, and a halogenated butyl rubber, and any one or a mixture two or more thereof may be used.

The rubber composition may include a filler of 0.1 parts by weight to 200 parts by weight, or 10 parts by weight to 120 parts by weight based on 100 parts by weight of the modified conjugated diene-based polymer of the present invention. The filler may be, for example, a silica-based filler, particularly, wet silica (hydrated silicate), dry silica (anhydrous silicate), calcium silicate, aluminum silicate, or colloid silica. Preferably, the filler may be wet silica which has the most significant improving effect of destruction characteristics and compatible effect of wet grip. In addition, the rubber composition may further include a carbon-based filler, if needed.

In another embodiment, if silica is used as the filler, a silane coupling agent may be used together for the improvement of reinforcing and low exothermic properties. Particular examples of the silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolyltetrasulfide, and any one or a mixture of two or more thereof may be used. Preferably, bis(3-triethoxysilylpropyl)polysulfide or 3-trimethoxysilylpropylbenzothiazyltetrasulfide may be used in consideration of the improving effect of reinforcing properties.

In addition, in the rubber composition according to an embodiment of the present invention, since a modified conjugated diene-based polymer in which a functional group having high affinity with silica is brought in an active part is used as a rubber component, the mixing amount of the silane coupling agent may be smaller than a common case. Thus, the silane coupling agent may be used in an amount of 1 part by weight to 20 parts by weight, or 5 parts by weight to 15 parts by weight based on 100 parts by weight of silica. Within the above amount range, effect as a coupling agent may be sufficiently exhibited, and preventing effect of gelation of a rubber component may be achieved.

The rubber composition according to an embodiment of the present invention may be sulfur crosslinkable, and so may further include a vulcanizing agent. The vulcanizing agent may particularly be a sulfur powder and may be included in an amount of 0.1 parts by weight to 10 parts by weight based on 100 parts by weight of a rubber component. Within the above amount range, elasticity and strength required for a vulcanized rubber composition may be secured, and at the same time, an excellent low fuel consumption ratio may be achieved.

The rubber composition according to an embodiment of the present invention may further include various additives used in a common rubber industry in addition to the above components, particularly, a vulcanization accelerator, a process oil, an antioxidant, a plasticizer, an antiaging agent, a scorch preventing agent, a zinc white, stearic acid, a thermosetting resin, or a thermoplastic resin.

The vulcanization accelerator may include, for example, thiazole-based compounds such as 2-mercaptobenzothiazole (M), dibenzothiazyldisulfide (DM), and N-cyclohexyl-2-benzothiazylsulfenamide (CZ), or guanidine-based compounds such as diphenylguanidine (DPG), in an amount of 0.1 parts by weight to 5 parts by weight based on 100 parts by weight of the rubber component.

The process oil acts as a softener in a rubber composition and may include, for example, a paraffin-based, naphthene-based, or aromatic compound. An aromatic process oil may be used in consideration of tensile strength and abrasion resistance, and a naphthene-based or paraffin-based process oil may be used in consideration of hysteresis loss and properties at a low temperature. The process oil may be included in an amount of 100 parts by weight or less based on 100 parts by weight of the rubber component. Within the above-described range, the deterioration of the tensile strength and low exothermic properties (low fuel consumption ratio) of the vulcanized rubber may be prevented.

The antioxidant may include, for example, 2,6-di-t-butyl paracresol, or dibutylhydroxytoluen, and may be used in an amount of 0.1 parts by weight to 6 parts by weight based on 100 parts by weight of a rubber component.

The antiaging agent may include, for example, N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at a high temperature, in an amount of 0.1 parts by weight to 6 parts by weight based on 100 parts by weight of the rubber component.

The rubber composition according to an embodiment of the present invention may be obtained by mulling using a mulling apparatus such as a banbury mixer, a roll, and an internal mixer according to a mixing prescription. A rubber composition having low exothermic properties and good abrasion properties may be obtained by a vulcanization process after a molding process.

Therefore, the rubber composition may be useful to the manufacture of each member of a tire such as a tire tread, an under tread, a side wall, a carcass coating rubber, a belt coating rubber, a bead filler, a chafer, and a bead coating rubber, or to the manufacture of rubber products in various industries such as a vibration-proof rubber, a belt conveyor, and a hose.

Also, the present invention provides a tire manufactured using the rubber composition.

The tire may be a tire or include a tire tread.

### Examples

Hereinafter, the present invention will be explained in more detail referring to embodiments. Embodiments according to the present invention may be modified into various other types, and the scope of the present invention should not be limited to the embodiments described below. The embodiments of the present invention are provided for completely explaining the present invention to a person having an average knowledge in the art.

### Example 1

To a first reactor among continuous reactors of three reactors connected in series, injected were a styrene solution in which 60 wt% of styrene was dissolved in n-hexane in a rate of 3.6 kg/h, a 1,3-butadiene solution in which 60 wt% of 1,3-butadiene was dissolved in n-hexane in a rate of 12.6 kg/h, n-hexane in a rate of 47.2 kg/h, a 1,2-butadiene solution in which 2.0 wt% of 1,2-butadiene was dissolved in n-hexane in a rate of 40 g/h, a 2,2-di(2-tetrahydrofuryl)propan (DTP) solution in which 10 wt% of 2,2-di(2-tetrahydrofuryl)propan was dissolved in n-hexane as a polar additive in a rate of 125.0 g/h, and an n-butyllithium solution in which 10 wt% of n-butyllithium was dissolved in n-hexane as a polymerization initiator in a rate of 46.0 g/h.

In this case, the temperature of the first reactor was maintained to 45°C, and when a polymerization conversion ratio reached 48%, a polymer was transported from the first reactor to a second reactor via a transport pipe.

Then, to the second reactor, a 1,3-butadiene solution in which 60 wt% of 1,3-butadiene was dissolved in n-hexane, was injected in a rate of 0.65 kg/h. In this case, the temperature of the second reactor was maintained to 60°C, and when a polymerization conversion ratio reached 95% or more, a polymer was transported from the second reactor to a third reactor via a transport pipe.

The polymer was transported from the second reactor to the third reactor, and a solution in which 3,3'-(1,1,3,3-tetramethoxydisiloxane-1,3-diyl)bis(N,N-diethylpropan-1-amine was dissolved as a modifier, was injected to the third reactor [modifier:act. Li=1:1 mol]. The temperature of the third reactor was maintained to 60°C.

After that, to a polymerization solution discharged from the third reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 2

To a first reactor among continuous reactors of three reactors connected in series, injected were a styrene solution in which 60 wt% of styrene was dissolved in n-hexane in a rate of 3.6 kg/h, a 1,3-butadiene solution in which 60 wt% of 1,3-butadiene was dissolved in n-hexane in a rate of 12.6 kg/h, n-hexane in a rate of 47.2 kg/h, a 1,2-butadiene solution in which 2.0 wt% of 1,2-butadiene was dissolved in n-hexane in a rate of 40 g/h, a 2,2-di(2-tetrahydrofuryl)propan solution in which 10 wt% of 2,2-di(2-tetrahydrofuryl)propan was dissolved in n-hexane as a polar additive in a rate of 125.0 g/h, and an n-butyllithium solution in which 10 wt% of n-butyllithium was dissolved in n-hexane as a polymerization initiator in a rate of 36.0 g/h.

In this case, the temperature of the first reactor was maintained to 55°C, and when a polymerization conversion ratio reached 45%, a polymer was transported from the first reactor to a second reactor via a transport pipe.

Then, to the second reactor, a 1,3-butadiene solution in which 60 wt% of 1,3-butadiene was dissolved in n-hexane, was injected in a rate of 0.65 kg/h. In this case, the temperature of the second reactor was maintained to 65°C, and when a polymerization conversion ratio reached 95% or more, a polymer was transported from the second reactor to a third reactor via a transport pipe.

The polymer was transported from the second reactor to the third reactor, and a solution in which N,N-bis(3-(diethoxy(methyl)silyl)propyl)-methyl-1-amine was dissolved as a modifier, was injected to the third reactor [modifier:act. Li=1:1 mol]. The temperature of the third reactor was maintained to 65°C.

After that, to a polymerization solution discharged from the third reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 3

To a first reactor among continuous reactors of two reactors connected in series, injected were a styrene solution in which 60 wt% of styrene was dissolved in n-hexane in a rate of 3.6 kg/h, a 1,3-butadiene solution in which 60 wt% of 1,3-butadiene was dissolved in n-hexane in a rate of 12.6 kg/h, n-hexane in a rate of 47.2 kg/h, a 1,2-butadiene solution in which 2.0 wt% of 1,2-butadiene was dissolved in n-hexane in a rate of 40 g/h, a 2,2-di(2-tetrahydrofuryl)propan solution in which 10 wt% of 2,2-di(2-tetrahydrofuryl)propan was dissolved in n-hexane as a polar additive in a rate of 125.0 g/h, and an n-butyllithium solution in which 10 wt% of n-butyllithium was dissolved in n-hexane as a polymerization initiator in a rate of 46.0 g/h.

In this case, the temperature of the first reactor was maintained to 55°C, and when a polymerization conversion ratio reached 50%, a polymer was transported from the first reactor to a second reactor via a transport pipe.

Then, to the second reactor, a 1,3-butadiene solution in which 60 wt% of 1,3-butadiene was dissolved in n-hexane was injected in a rate of 0.65 kg/h. In this case, the temperature of the second reactor was maintained to 65°C, and when a polymerization conversion ratio reached 95% or more, a polymer was transported from the second reactor to a blend tank via a transport pipe.

During transporting the polymer from the second reactor to the blend tank, a solution in which 3,13-dimethoxy-3,8,8,13-tetramethyl-2,14-dioxa-7,9-dithia-3,8,13-trisilapentadecane was dissolved as a modifier in n-hexane, was injected to a line for transportation to the blend tank [modifier:act. Li=1:1 mol].

After that, to a polymerization solution discharged from the second reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 4

A modified conjugated diene-based polymer was prepared by performing the same method as Example 1 except for maintaining the reaction temperature in a first reactor to 40°C, and transporting a polymer from the first reactor to a second reactor via a transport pipe when a polymerization conversion ratio reached 38%.

### Example 5

A modified conjugated diene-based polymer was prepared by performing the same method as Example 1 except for maintaining the reaction temperature in a first reactor to 40°C, transporting a polymer from the first reactor to a second reactor via a transport pipe when a polymerization conversion ratio reached 32%, and injecting a solution of N-(3-(1H-imidazol-1-yl)propyl-3-(triethoxysilyl)-N-(3-(triethoxysilyl)propyl)propan-1-amine as a modifier in n-hexane [modifier:act. Li=1:1].

### Example 6

To a first reactor among continuous reactors of two reactors connected in series, injected were a styrene solution in which 60 wt% of styrene was dissolved in n-hexane in a rate of 3.6 kg/h, a 1,3-butadiene solution in which 60 wt% of 1,3-butadiene was dissolved in n-hexane in a rate of 12.6 kg/h, n-hexane in a rate of 47.2 kg/h, a 1,2-butadiene solution in which 2.0 wt% of 1,2-butadiene was dissolved in n-hexane in a rate of 40 g/h, a 2,2-di(2-tetrahydrofuryl)propan solution in which 10 wt% of 2,2-di(2-tetrahydrofuryl)propan was dissolved in n-hexane as a polar additive in a rate of 125.0 g/h, and an n-butyllithium solution in which 10 wt% of n-butyllithium was dissolved in n-hexane as a polymerization initiator in a rate of 46.0 g/h.

In this case, the temperature of the first reactor was maintained to 50°C, and when a polymerization conversion ratio reached 50%, a polymer was transported from the first reactor to a second reactor via a transport pipe.

Then, to the second reactor, a 1,3-butadiene solution in which 60 wt% of 1,3-butadiene was dissolved in n-hexane was injected in a rate of 0.65 kg/h. In this case, the temperature of the second reactor was maintained to 65°C, and when a polymerization conversion ratio reached 95% or more, a polymer was transported from the second reactor to a blend tank via a transport pipe.

During transporting the polymer from the second reactor to the blend tank, a solution in which N-(3,6,9,12-tetraoxahexadecyl)-N-(3-(triethoxysilyl)propyl)-3,6,9,12-tetraoxahexadecane-1-amine was dissolved as a modifier in n-hexane, was injected to a transport line to the blend tank [modifier:act. Li=1:1 mol].

After that, to a polymerization solution discharged from the second reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 7

To a first reactor among continuous reactors of three reactors connected in series, injected were a styrene solution in which 60 wt% of styrene was dissolved in n-hexane in a rate of 4.58 kg/h, a 1,3-butadiene solution in which 60 wt% of 1,3-butadiene was dissolved in n-hexane in a rate of 11.5 kg/h, n-hexane in a rate of 47.2 kg/h, a 1,2-butadiene solution in which 2.0 wt% of 1,2-butadiene was dissolved in n-hexane in a rate of 40 g/h, a 2,2-di(2-tetrahydrofuryl)propan (DTP) solution in which 10 wt% of 2,2-di(2-tetrahydrofuryl)propan was dissolved in n-hexane as a polar additive in a rate of 125.0 g/h, and an n-butyllithium solution in which 10 wt% of n-butyllithium was dissolved in n-hexane as a polymerization initiator in a rate of 46.0 g/h.

In this case, the temperature of the first reactor was maintained to 50°C, and when a polymerization conversion ratio reached 41%, a polymer was transported from the first reactor to a second reactor via a transport pipe.

Then, to the second reactor, a 1,3-butadiene solution in which 60 wt% of 1,3-butadiene was dissolved in n-hexane, was injected in a rate of 0.65 kg/h. In this case, the temperature of the second reactor was maintained to 60°C, and when a polymerization conversion ratio reached 95% or more, a polymer was transported from the second reactor to a third reactor via a transport pipe.

The polymer was transported from the second reactor to the third reactor, and a solution in which N,N-bis(3-(diethoxy(methyl)silyl)propyl)-methyl-1-amine was dissolved as a modifier in n-hexane, was injected to the third reactor [modifier:act. Li=1:1 mol]. The temperature of the third reactor was maintained to 60°C.

After that, to a polymerization solution discharged from the third reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 8

A modified conjugated diene-based polymer was prepared by performing the same method as Example 7 except for maintaining the reaction temperature in a first reactor to 60°C, transporting a polymer from the first reactor to a second reactor via a transport pipe when a polymerization conversion ratio reached 49%, and injecting a solution in which 3,13-dimethoxy-3,8,8,13-tetramethyl-2,14-dioxa-7,9-dithia-3,8,13-trisilapentadecane was dissolved as a modifier in n-hexane [modifier:act. Li=1:1].

### Example 9

To a first reactor among continuous reactors of two reactors connected in series, injected were a styrene solution in which 60 wt% of styrene was dissolved in n-hexane in a rate of 4.58 kg/h, a 1,3-butadiene solution in which 60 wt% of 1,3-butadiene was dissolved in n-hexane in a rate of 11.5 kg/h, n-hexane in a rate of 47.2 kg/h, a 1,2-butadiene solution in which 2.0 wt% of 1,2-butadiene was dissolved in n-hexane in a rate of 40 g/h, a 2,2-di(2-tetrahydrofuryl)propan solution in which 10 wt% of 2,2-di(2-tetrahydrofuryl)propan was dissolved in n-hexane as a polar additive in a rate of 125.0 g/h, and an n-butyllithium solution in which 10 wt% of n-butyllithium was dissolved in n-hexane as a polymerization initiator in a rate of 46.0 g/h.

In this case, the temperature of the first reactor was maintained to 60°C, and when a polymerization conversion ratio reached 50%, a polymer was transported from the first reactor to a second reactor via a transport pipe.

Then, to the second reactor, a 1,3-butadiene solution in which 60 wt% of 1,3-butadiene was dissolved in n-hexane was injected in a rate of 0.65 kg/h. In this case, the temperature of the second reactor was maintained to 65°C, and when a polymerization conversion ratio reached 95% or more, a polymer was transported from the second reactor to a blend tank via a transport pipe.

During transporting the polymer from the second reactor to the blend tank, a solution in which N-(3-(1H-imidazol-1-yl)propyl)-3-(triethoxysilyl)-N-(3-(triethoxysilyl)propyl)propan-1-amine was dissolved as a modifier, was injected to a line for transportation to the blend tank [modifier:act. Li=1:1 mol].

After that, to a polymerization solution discharged from the second reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 10

A modified conjugated diene-based polymer was prepared by performing the same method as Example 7 except for injecting a N,N,N' ,N'-tetramethylethylenediamine solution in which 35 wt% of N,N,N',N'-tetramethylethylenediamine was dissolved in n-hexane, as a polar additive instead of 2,2-di(2-tetrahydrofuryl)propan in a rate of 100 g/h, maintaining the reaction temperature in a first reactor to 70°C, transporting a polymer from the first reactor to a second reactor via a transport pipe when a polymerization conversion ratio reached 45%, and injecting a solution in which N-(3-(1H-imidazole-1-yl)propyl)-3-(triethoxysilyl)-N-(3-(triethoxysilyl)propyl)propan-1-amine was dissolved as a modifier in n-hexane [modifier:act. Li=1:1 mol].

### Example 11

To a first reactor among continuous reactors of three reactors connected in series, injected were a styrene solution in which 60 wt% of styrene was dissolved in n-hexane in a rate of 3.3 kg/h, a 1,3-butadiene solution in which 60 wt% of 1,3-butadiene was dissolved in n-hexane in a rate of 10.9 kg/h, n-hexane in a rate of 39.4 kg/h, a 1,2-butadiene solution in which 2.0 wt% of 1,2-butadiene was dissolved in n-hexane in a rate of 40 g/h, a solution in which 10 wt% of tetramethylethylenediamine (TMEDA) was dissolved in n-hexane as a polar additive in a rate of 7.0 g/h, and an n-butyllithium solution in which 10 wt% of n-butyllithium was dissolved in n-hexane as a polymerization initiator in a rate of 46.0 g/h.

In this case, the temperature of the first reactor was maintained to 60°C, and when a polymerization conversion ratio reached 48%, a polymer was transported from the first reactor to a second reactor via a transport pipe. Then, to the second reactor, a 1,3-butadiene solution in which 60 wt% of 1,3-butadiene was dissolved in n-hexane was injected in a rate of 2.4 kg/h. In this case, the temperature of the second reactor was maintained to 65°C, and when a polymerization conversion ratio reached 95% or more, a polymer was transported from the second reactor to a third reactor via a transport pipe.

The polymer was transported from the second reactor to the third, and a solution in which N-(3,6,9,12-tetraoxahexadecyl)-N-(3-(triethoxysilyl)propyl)-3,6,9,12-tetraoxahexadecane-1-amione was dissolved as a modifier, was injected to the third reactor [modifier:act. Li=1:1 mol]. The temperature of the third reactor was maintained to 65°C.

After that, to a polymerization solution discharged from the third reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 12

To a first reactor among continuous reactors of two reactors connected in series, injected were a styrene solution in which 60 wt% of styrene was dissolved in n-hexane in a rate of 3.3 kg/h, a 1,3-butadiene solution in which 60 wt% of 1,3-butadiene was dissolved in n-hexane in a rate of 10.9 kg/h, n-hexane in a rate of 39.4 kg/h, a 1,2-butadiene solution in which 2.0 wt% of 1,2-butadiene was dissolved in n-hexane in a rate of 40 g/h, a N,N,N',N'-tetramethylethylenediamine solution in which 10 wt% of N,N,N',N'-tetramethylethylenediamine was dissolved in n-hexane as a polar additive in a rate of 7.0 g/h, and an n-butyllithium solution in which 10 wt% of n-butyllithium was dissolved in n-hexane as a polymerization initiator in a rate of 46.0 g/h. In this case, the temperature of the first reactor was maintained to 65°C, and when a polymerization conversion ratio reached 48%, a polymer was transported from the first reactor to a second reactor via a transport pipe.

Then, to the second reactor, a 1,3-butadiene solution in which 60 wt% of 1,3-butadiene was dissolved in n-hexane was injected in a rate of 2.4 kg/h. In this case, the temperature of the second reactor was maintained to 70°C, and when a polymerization conversion ratio reached 95% or more, a polymer was transported from the second reactor to a blend tank via a transport pipe.

During transporting the polymer from the second reactor to the blend tank, a solution in which 3,3'-(1,1,3,3-tetramethoxydisiloxane-1,3-diyl)bis(N,N-diethylpropan-1-amine) was dissolved as a modifier, was injected to a line for transportation to the blend tank [modifier:act. Li=1:1 mol].

After that, to a polymerization solution discharged from the second reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 13

To a first reactor among continuous reactors of two reactors connected in series, injected were a styrene solution in which 60 wt% of styrene was dissolved in n-hexane in a rate of 3.3 kg/h, a 1,3-butadiene solution in which 60 wt% of 1,3-butadiene was dissolved in n-hexane in a rate of 10.9 kg/h, n-hexane in a rate of 39.4 kg/h, a 1,2-butadiene solution in which 2.0 wt% of 1,2-butadiene was dissolved in n-hexane in a rate of 40 g/h, a 2,2-di(2-tetrahydrofuryl)propan solution in which 10 wt% of 2,2-di(2-tetrahydrofuryl)propan was dissolved as a polar additive in n-hexane in a rate of 2.0 g/h, and an n-butyllithium solution in which 10 wt% of n-butyllithium was dissolved in n-hexane as a polymerization initiator in a rate of 46.0 g/h. In this case, the temperature of the first reactor was maintained to 55°C, and when a polymerization conversion ratio reached 50%, a polymer was transported from the first reactor to a second reactor via a transport pipe.

Then, to the second reactor, a 1,3-butadiene solution in which 60 wt% of 1,3-butadiene was dissolved in n-hexane was injected in a rate of 2.4 kg/h. In this case, the temperature of the second reactor was maintained to 70°C, and when a polymerization conversion ratio reached 95% or more, a polymer was transported from the second reactor to a blend tank via a transport pipe.

During transporting the polymer from the second reactor to the blend tank, a solution in which 3,3'-(1,1,3,3-tetramethoxydisiloxane-1,3-diyl)bis(N,N-diethylpropan-1-amine) was dissolved as a modifier, was injected to a line for transportation to the blend tank [modifier:act. Li=1:1 mol].

After that, to a polymerization solution discharged from the second reactor, an IR1520 (BASF Co.) solution in which 30 wt% of an antioxidant was dissolved, was injected in a rate of 170 g/h and stirred. The polymer thus obtained was injected in hot water heated with steam and stirred to remove solvents to prepare a modified conjugated diene-based polymer.

### Example 14

A modified conjugated diene-based polymer was prepared by performing the same method as Example 11 except for maintaining the reaction temperature in a first reactor to 50°C, transporting a polymer from the first reactor to a second reactor via a transport pipe when a polymerization conversion ratio reached 42%, and injecting a solution in which 3,13-dimethoxy-3,8,8,13-tetramethyl-2,14-dioxa-7,9-dithia-3,8,13-trisilapentadecane was dissolved as a modifier in n-hexane [modifier:act. Li=1:1 mol].

### Comparative Example 1

A modified conjugated diene-based polymer was prepared by performing the same method as Example 1 except for maintaining the reaction temperature to 55°C in a first reactor, 65°C in a second reactor, and 65°C in a third reactor, and injecting a solution in which dimethyl tetrachlorosilane was dissolved as a modifier instead of 3,3'-(1,1,3,3-tetramethoxydisiloxane-1,3-diyl)bis(N,N-diethylpropan-1-amine in n-hexane [modifier:act. Li=1:1 mol].

### Comparative Example 2

To a 20 L autoclave reactor, 100 g of styrene, 880 g of 1,3-butadiene, 5,000 g of n-hexane and 0.89 g of 2,2-di(2-tetrahydrofuryl)propan as a polar additive were injected, and the internal temperature of the reactor was elevated to 40°C. When the internal temperature of the reactor reached 40°C, 4.7 mmol of activated n-butyllithium as a polymerization initiator was injected and an adiabatic reaction with heating was performed. After about 20 minutes lapse, 20 g of 1,3-butadiene was injected for capping the terminals of a polymer chain with butadiene. After 5 minutes, 4.7 mmol of N-(3-(1H-imidazol-1-yl)propyl)-3-(triethoxysilyl)-N-(3-(triethoxysilyl)propyl)propan-1-amine was injected and reacted for 15 minutes. Then, the polymerization reaction was quenched using ethanol, and 45 ml of a solution in which 0.3 wt% of IR1520 (BASF Co.) antioxidant was dissolved in n-hexane, was added thereto. Then, the polymer thus obtained was injected into hot water heated using steam and stirred to remove solvents to prepare a conjugated diene-based polymer.

### Comparative Example 3

A modified conjugated diene-based polymer was prepared by performing the same method as Example 1 except for maintaining the reaction temperature to 75°C in a first reactor, 85°C in a second reactor, and 85°C in a third reactor, and transporting a polymer from the first reactor to the second reactor via a transport pipe when a polymerization conversion ratio in the first reactor reached 68%.

### Comparative Example 4

A modified conjugated diene-based polymer was prepared by performing the same method as Example 1 except for maintaining the reaction temperature to 75°C in a first reactor, 85°C in a second reactor, and 85°C in a third reactor, transporting a polymer from the first reactor to the second reactor via a transport pipe when a polymerization conversion ratio in the first reactor reached 73%, and polymerizing by injecting a solution in which N-(3,6,9,12-tetraoxahexadecyl)-N-(3-(triethoxysilyl)propyl)-3,6,9,12-tetraoxahexadecane-1-amine was dissolved as a modifier in n-hexane [modifier:act. Li=1:1 mol].

### Comparative Example 5

A modified conjugated diene-based polymer was prepared by performing the same method as Example 7 except for maintaining the reaction temperature to 70°C in a first reactor, transporting a polymer from the first reactor to a second reactor via a transport pipe when a polymerization conversion ratio in the first reactor reached 48%, and polymerizing by injecting a solution in which dimethyl dichlorosilane was dissolved in n-hexane as a modifier [modifier:act. Li=1:1 mol].

### Comparative Example 6

A modified conjugated diene-based polymer was prepared by performing the same method as Example 10 except for polymerizing by maintaining the reaction temperature to 75°C in a first reactor, and transporting a polymer from the first reactor to a second reactor via a transport pipe when a polymerization conversion ratio in the first reactor reached 59%.

### Comparative Example 7

A modified conjugated diene-based polymer was prepared by performing the same method as Example 9 except for polymerizing by maintaining the reaction temperature to 85°C in a first reactor, and transporting a polymer from the first reactor to a second reactor via a transport pipe when a polymerization conversion ratio in the first reactor reached 78%.

### Comparative Example 8

A modified conjugated diene-based polymer was prepared by performing the same method as Example 11 except for polymerizing by maintaining the reaction temperature to 75°C in a first reactor, to 85°C in a second reactor, and to 85°C in a third reactor, transporting a polymer from the first reactor to the second reactor via a transport pipe when a polymerization conversion ratio in the first reactor reached 67%, and continuously injecting a solution in which dimethyl dichlorosilane was dissolved as a modifier in n-hexane [modifier:act. Li=1:1 mol].

### Comparative Example 9

A modified conjugated diene-based polymer was prepared by performing the same method as Example 12 except for polymerizing by maintaining the reaction temperature to 90°C in a first reactor, transporting a polymer from the first reactor to a second reactor via a transport pipe when a polymerization conversion ratio in the first reactor reached 82%, and continuously injecting a solution in which N,N-bis(3-(diethoxy(methyl)silyl)propyl)-methyl-1-amine was dissolved as a modifier in n-hexane [modifier:act. Li=1:1 mol].

### Experimental Examples

### Experimental Example 1

With respect to each of the modified or unmodified conjugated diene-based polymers prepared in the examples and the comparative examples, styrene unit and vinyl contents in each polymer, a weight average molecular weight (Mw, x10³ g/mol), a number average molecular weight (Mn, x10³ g/mol), molecular weight distribution (PDI, MWD), mooney viscosity (MV), and a Si content were measured. The results are shown in Table 1 to Table 5 below. In addition, reaction conditions and polar additives and modifiers used in Examples 1 to 14 and Comparative Examples 1 to 9 are summarized and shown in Table 1 below.

### 1) Styrene unit and vinyl contents (wt%)

The styrene unit (SM) and vinyl contents in each polymer were measured and analyzed using Varian VNMRS 500 MHz NMR.

When measuring NMR, 1,1,2,2-tetrachloroethanol was used as a solvent, and styrene unit and vinyl contents were calculated by calculating a solvent peak as 5.97 ppm, and regarding 7.2-6.9 ppm as random styrene peaks, 6.9-6.2 ppm as block styrene peaks, 5.8-5.1 ppm as 1,4-vinyl peaks, and 5.1-4.5 ppm as 1,2-vinyl peaks.

### 2) Weight average molecular weight (Mw, x10³ g/mol), number average molecular weight (Mn, x10³ g/mol) and molecular weight distribution (PDI, MWD)

By gel permeation chromatography (GPC) analysis, the weight average molecular weight (Mw) and the number average molecular weight (Mn) were measured and molecular weight distribution (PDI, MWD, Mw/Mn) was calculated from each molecular weight thus measured. Particularly, GPC was conducted using two columns of PLgel Olexis (Polymer Laboratories Co.) and one column of PLgel mixed-C (Polymer Laboratories Co.) in combination, and polystyrene (PS) as a GPC standard material for calculating the molecular weights. A solvent for measuring GPC was prepared by mixing tetrahydrofuran with 2 wt% of an amine compound.

### 3) Mooney viscosity

The mooney viscosity (MV, (ML1+4, @100°C) MU) was measured by using MV-2000 (Alpha Technologies Co.) using Large Rotor at a rotor speed of 2±0.02 rpm at 100°C. In this case, a specimen used was stood at room temperature (23±3°C) for 30 minutes or more, and 27±3 g of the specimen was collected and put in a die cavity, and then, Platen was operated for measurement.

### 4) Si content

The Si content was measured by an ICP analysis method, which used an inductively coupled plasma optical emission spectroscopy (ICP-OES; Optima 7300DV). If the inductively coupled plasma optical emission spectroscopy was used, measurement was performed by adding about 0.7 g of a specimen to a platinum (Pt) crucible and adding about 1 ml of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:
1) step 1: initial temp 0°C, rate (temp/hr) 180°C/hr, temp (holdtime) 180°C (1hr)
2) step 2: initial temp 180°C, rate (temp/hr) 85°C/hr, temp (holdtime) 370°C (2hr)
3) step 3: initial temp 370°C, rate (temp/hr) 47°C/hr, temp (holdtime) 510°C (3hr),
adding 1 ml of concentrated nitric acid (48 wt%) and 20 µl of concentrated hydrofluoric acid (50 wt%) to a residue, sealing the platinum crucible and shaking for 30 minutes or more, adding 1 ml of boric acid to the specimen, storing at 0°C for 2 hours or more, diluting in 30 ml of ultrapure water, and performing incineration.

**[Table 1]**

| Division | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| Reaction conditions | Number of reactor | 3 | 3 | 2 | 3 | 3 | 2 | 3 | batch | 3 | 3 |
| | Polar additive | DTP | DTP | DTP | DTP | DTP | DTP | DTP | DTP | DTP | DTP |
| | Modifier | A | B | C | A | E | D | F | E | A | D |
| | M: PI | 1:1 | | | | | | | | | |
| | First reactor temp (°C) | 45 | 55 | 55 | 50 | 50 | 50 | 55 | 40-80 | 75 | 75 |
| | First reactor polymerization conversion ratio (%) | 48 | 45 | 50 | 38 | 32 | 50 | 48 | - | 68 | 73 |
| NMR (wt%) | SM | 21 | 21 | 21 | 21 | 21 | 21 | 21 | 21 | 21 | 21 |
| | Vinyl | 50 | 50 | 51 | 50 | 49 | 50 | 50 | 50 | 50 | 50 |
| GPC | Mw (X10³ g/mol) | 530 | 490 | 574 | 745 | 604 | 482 | 589 | 514 | 723 | 768 |
| | Mn (X10³ g/mol) | 337 | 310 | 350 | 490 | 380 | 307 | 310 | 317 | 330 | 328 |
| | PDI | 1.57 | 1.58 | 1.64 | 1.52 | 1.59 | 1.57 | 1.90 | 1.62 | 2.19 | 2.34 |
| Mooney viscosity (MV) | | 68 | 63 | 73 | 78 | 70 | 69 | 68 | 65 | 70 | 78 |
| Si content (ppm) | 200 | 150 | 201 | 232 | 195 | 180 | 30 | 210 | 150 | 80 | |

**[Table 2]**

| Division | | Example | | | | Comparative Example | | |
|---|---|---|---|---|---|---|---|---|
| | | 7 | 8 | 9 | 10 | 5 | 6 | 7 |
| Reaction conditions | Number of reactor | 3 | 3 | 2 | 3 | 3 | 3 | 2 |
| | Polar additive | DTP | DTP | DTP | TMEDA | DTP | TMEDA | DTP |
| | Modifier | B | C | E | E | F | E | E |
| | M: PI | 1:1 | | | | | | |
| | First reactor temp (°C) | 50 | 60 | 60 | 70 | 70 | 75 | 85 |
| | First reactor polymerization conversion ratio (%) | 41 | 49 | 30 | 45 | 48 | 59 | 78 |
| NMR (wt%) | SM | 27 | 27 | 27 | 27 | 27 | 27 | 27 |
| | Vinyl | 43 | 43 | 43 | 43 | 43 | 43 | 43 |
| GPC | Mw (X10³ g/mol) | 502 | 561 | 583 | 618 | 574 | 671 | 675 |
| | Mn (X10³ g/mol) | 317 | 332 | 362 | 368 | 302 | 298 | 266 |
| | PDI | 1.58 | 1.69 | 1.61 | 1.68 | 1.90 | 2.25 | 2.54 |
| Mooney viscosity (MV) | | 65 | 67 | 72 | 74 | 70 | 75 | 76 |
| Si content (ppm) | | 223 | 180 | 205 | 192 | 75 | 159 | 145 |

**[Table 3]**

| Division | | Example | | | | Comparative Example | |
|---|---|---|---|---|---|---|---|
| | | 11 | 12 | 13 | 14 | 8 | 9 |
| Reaction conditions | Number of reactor | 3 | 2 | 2 | 3 | 3 | 2 |
| | Polar additive | TMEDA | TMEDA | DTP | DTP | TMEDA | TMED A |
| | Modifier | B | A | A | C | F | B |
| | M: PI | 1:1 | | | | | |
| | First reactor | 60 | 65 | 55 | 50 | 75 | 90 |
| | temp (°C) | | | | | | |
| | First reactor polymerization conversion ratio (%) | 48 | 48 | 50 | 42 | 67 | 82 |
| NMR (wt%) | SM | 18 | 18 | 18 | 18 | 18 | 18 |
| | Vinyl | 10 | 10 | 10 | 10 | 10 | 10 |
| GPC | Mw (X10³ g/mol) | 624 | 643 | 596 | 551 | 760 | 870 |
| | Mn (X10³ g/mol) | 400 | 420 | 403 | 330 | 400 | 380 |
| | PDI | 1.56 | 1.53 | 1.48 | 1.67 | 1.90 | 2.29 |
| Mooney viscosity (MV) | | 73 | 75 | 75 | 68 | 72 | 84 |
| Si content (ppm) | | 93 | 187 | 180 | 198 | 69 | 48 |

In Table 1 to Table 3, particular materials and ratios used as the polar additives and the modifiers are as follows.
* M:PI = molar ratio of modifier and polymerization initiator (act. Li)
* DTP: 2,2-di(2-tetrahydrofuryl)propan
* TMEDA: N,N,N',N'-tetramethylethylenediamine
* Modifier A: 3,3'-(1,1,3,3-tetramethoxydisiloxane-1,3-diyl)bis(N,N-diethylpropan-1-amine
* Modifier B: N,N-bis(3-(diethoxy(methyl)silyl)propyl)-methyl-1-amine
* Modifier C: 3,13-dimethoxy-3,8,8,13-tetramethyl-2,14-dioxa-7,9-dithia-3,8,13-trisilapentadecane
* Modifier D: N-(3,6,9,12-tetraoxahexadecyl)-N-(3-(triethoxysilyl)propyl)-3,6,9,12-tetraoxahexadecane-1-amine
* Modifier E: N-(3-(1H-imidazol-1-yl)propyl)-3-(triethoxysilyl)-N-(3-(triethoxysilyl)propyl)propan-1-amine
* Modifier F: dimethyl dichlorosilane

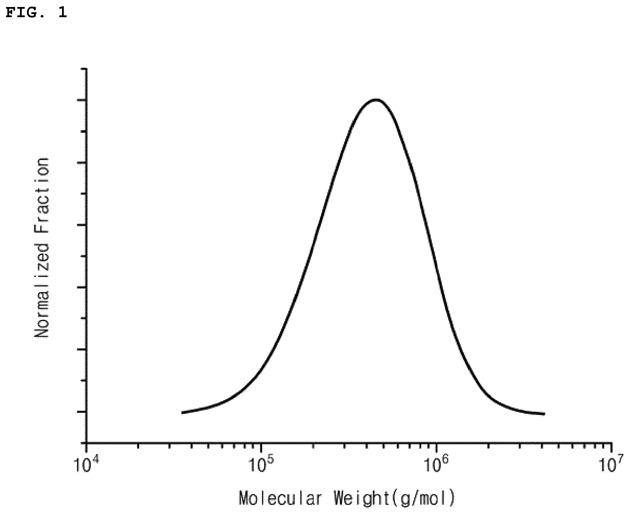

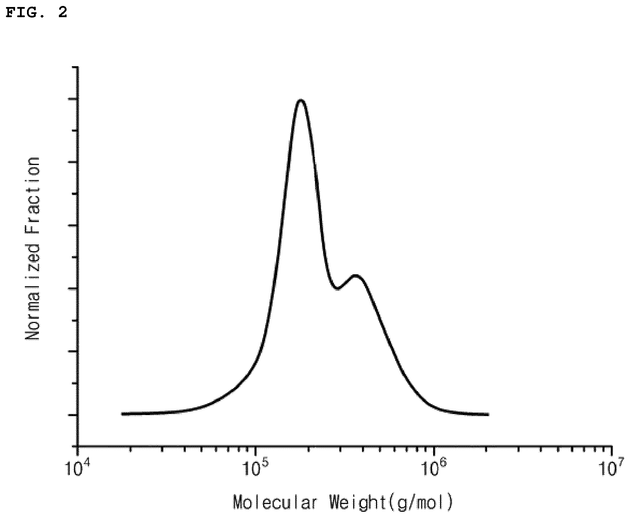

As shown in Table 1 to Table 3, all modified conjugated diene-based polymers of Examples 1 to 14 according to exemplary embodiments of the present invention were found to have PDI of less than 1.7 and the Si content of 100 ppm or more. On the contrary, all modified conjugated diene-based polymers of Comparative Examples 1 and Comparative Example 3 to Comparative Example 9 had PDI of greater than 1.7. In addition, the modified conjugated diene-based polymer of Example 1 according to an embodiment of the present invention showed a unimodal shape molecular weight distribution curve by gel permeation chromatography (see FIG. 1), but the modified conjugated diene-based polymer of Comparative Example 2, which was prepared by batch reaction, showed a bimodal shape molecular weight distribution curve by gel permeation chromatography (see FIG. 2).

### Experimental Example 2

In order to comparatively analyze the physical properties of rubber compositions including each of the modified or unmodified copolymers prepared in the examples and the comparative examples and molded articles manufactured therefrom, tensile properties and viscoelasticity properties were measured, and the results are shown in Table 5 to Table 7 below.

### 1) Preparation of rubber specimen

Blending was performed using each of the modified or unmodified conjugated diene-based polymers of the examples and the comparative examples as a raw material rubber under blending conditions shown in Table 4 below. The raw materials in Table 4 are represented by parts by weight based on 100 parts by weight of the raw material rubber.

**[Table 4]**

| Division | Raw material | Amount (parts by weight) |
|---|---|---|
| First stage mulling | Rubber | 100 |
| | Silica | 70 |
| | Coupling agent (X50S) | 11.2 |
| | Process oil | 37.5 |
| | Zinc white | 3 |
| | Stearic acid | 2 |
| | Antioxidant | 2 |
| | Antiaging agent | 2 |
| | wax | 1 |
| Second stage mulling | Sulfur | 1.5 |
| | Rubber accelerator | 1.75 |
| | Vulcanization accelerator | 2 |

Particularly, the rubber specimen was mulled via a first stage mulling and a second stage mulling. In the first stage mulling, a raw material rubber, silica (filler), an organic silane coupling agent, a process oil, zinc oxide, stearic acid, an antioxidant, an antiaging agent and wax were mulled using a banbury mixer equipped with a temperature controlling apparatus. In this case, the initial temperature of a mulling apparatus was controlled to 70°C, and after finishing mixing, a first compound mixture was obtained at a discharge temperature of 145°C to 155°C. In the second stage mulling, the first compound mixture was cooled to room temperature, and the first compound mixture, sulfur, a rubber accelerator, and a vulcanization accelerator were added to the mulling apparatus and mixed at a temperature of 100°C or less to obtain a second compound mixture. Then, via a curing process at 160°C for 20 minutes, a rubber specimen was formed.

### 2) Tensile properties

The tensile properties were measured by manufacturing each specimen and measuring tensile strength when broken and tensile stress when stretched by 300% (300% modulus) of each specimen according to an ASTM 412 tensile test method. Particularly, tensile properties were measured using a Universal Test Machin 4204 tensile tester (Instron Co.) in a rate of 50 cm/min at room temperature.

### 3) Viscoelasticity properties

The viscoelasticity properties were secured by measuring viscoelasticity behavior on thermodynamic deformation at each measurement temperature (-60°C-60°C) with a frequency of 10 Hz by using a dynamic mechanical analyzer (GABO Co.) in a film tension mode and securing a tan δ value. From the resultant values, if the index value of tan δ at a low temperature of 0°C increases, wet skid resistance becomes better, and if the index value of tan δ at a high temperature of 60°C increases, hysteresis loss decreases, and low running resistance (fuel consumption ratio) becomes better. In this case, each of the resultant values of Example 1 to Example 6, and Comparative Example 2 to Comparative Example 4 were indexed by setting the resultant values of Comparative Example 1 to 100, each of the resultant values of Example 7 to Example 10, Comparative Example 6 and Comparative Example 7 were indexed by setting the resultant values of Comparative Example 5 to 100, and each of the resultant values of Example 11 to Example 14, and Comparative Example 9 were indexed by setting the resultant values of Comparative Example 8 to 100.

### 4) Processability properties

By measuring the mooney viscosity (MV, (ML 1+4, @100°C) MU) of the secondary mixture compound obtained during 1) preparation of rubber specimen, the processability properties of each polymer was comparatively analyzed, and in this case, the lower the measured value of the moony viscosity is, the better the processability properties are.

Particularly, by using MV-2000 (Alpha Technologies Co.) using Large Rotor at a rotor speed of 2±0.02 rpm at 100°C, each secondary mixture compound was stood at room temperature (23±3°C) for 30 minutes or more, and 27±3 g was collected and put in a die cavity, and then, Platen was operated for 4 minutes for measurement.

**[Table 5]**

| Division | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| Processability properties | | 62 | 59 | 63 | 67 | 52 | 63 | 75 | 79 | 71 | 67 |
| Tensile properties | Tensile strength (kgf/cm²) | 175 | 172 | 211 | 183 | 215 | 180 | 172 | 167 | 175 | 190 |
| | 300% modulus (kgf/cm²) | 160 | 150 | 145 | 179 | 196 | 155 | 128 | 112 | 150 | 135 |
| Viscoelasticity properties (Index) | tan δ (at 0°C) | 102 | 100 | 101 | 102 | 102 | 103 | 100 | 99 | 101 | 101 |
| | tan δ (at 60°C) | 121 | 120 | 117 | 127 | 123 | 119 | 100 | 120 | 113 | 109 |

**[Table 6]**

| Division | | Example | | | | Comparative Example | | |
|---|---|---|---|---|---|---|---|---|
| | | 7 | 8 | 9 | 10 | 5 | 6 | 7 |
| Processability properties | | 61 | 59 | 64 | 66 | 79 | 70 | 72 |
| Tensile properties | Tensile strength (kgf/cm²) | 179 | 196 | 176 | 175 | 173 | 194 | 195 |
| | 300% modulus (kgf/cm²) | 142 | 134 | 126 | 129 | 118 | 112 | 107 |
| Viscoelasticity properties | tan δ (at 0°C) | 101 | 103 | 102 | 102 | 100 | 102 | 103 |
| | tan δ (at | 119 | 116 | 115 | 114 | 100 | 106 | 104 |
| (Index) | 60°C) | | | | | | | |

**[Table 7]**

| Division | | Example | | | | Comparative Example | |
|---|---|---|---|---|---|---|---|
| | | 11 | 12 | 13 | 14 | 8 | 9 |
| Processability properties | | 68 | 70 | 71 | 65 | 76 | 72 |
| Tensile properties | Tensile strength (kgf/cm²) | 200 | 210 | 205 | 217 | 207 | 185 |
| | 300% modulus (kgf/cm²) | 80 | 72 | 74 | 81 | 60 | 150 |
| Viscoelasticity properties (Index) | tan δ (at 0°C) | 103 | 102 | 103 | 102 | 100 | 101 |
| | tan δ (at 60°C) | 129 | 127 | 125 | 119 | 100 | 112 |

As shown in Table 5 to Table 7, Example 1 to Example 14 according to exemplary embodiments of the present invention showed improved tensile properties, viscoelasticity properties and processability properties when compared to Comparative Example 1 to Comparative Example 9.

Meanwhile, with respect to the viscoelasticity properties, it is known very difficult that a tan δ value at 0°C increases while a tan δ value at 60°C increases at the same time. Accordingly, when compared to Comparative Example 1 to Comparative Example 9, Example 1 to Example 14 showing equal or better degree of a tan δ value at 0°C and remarkably improved effect of a tan δ value at 60°C, had very excellent viscoelasticity properties.

## Claims

1. A modified conjugated diene-based polymer having:
a unimodal shape of gel permeation chromatography (GPC) molecular weight distribution curve,
a molecular weight distribution (PDI; MWD) of less than 1.7, and
a Si content of 100 ppm or more based on weight, and
the modified conjugated diene-based polymer comprising a repeating unit derived from an aromatic vinyl monomer in an amount of 15 wt% or more and less than 30 wt%,
wherein the Si content is measured by an ICP analysis method using an inductively coupled plasma optical emission spectroscopy,
wherein the modified conjugated diene-based polymer comprises a repeating unit derived from a conjugated diene-based monomer and a functional group derived from a modifier,
wherein the modifier is a compound represented by a formula selected from: 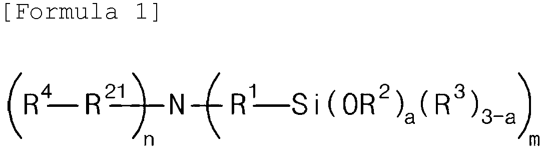
wherein R¹ is a single bond, or an alkylene group of 1 to 5 carbon atoms, R² and R³ are each independently hydrogen, an alkyl group of 1 to 5 carbon atoms, R⁴ is hydrogen, an alkyl group of 1 to 5 carbon atoms, a tetravalent alkylsilyl group which is substituted with an alkyl group of 1 to 5 carbon atoms, or a heterocycle of 2 to 5 carbon atoms, R²¹ is - [R⁴²O]ⱼ-, where R⁴² is an alkylene group of 1 to 5 carbon atoms, a is an integer of 2 or 3, m is an integer selected from 1 to 3, n is an integer of 1 or 2, where m+n=3 is satisfied, and if n is 2, a plurality of R⁹ groups are the same or different, and j is an integer selected from 1 to 10; 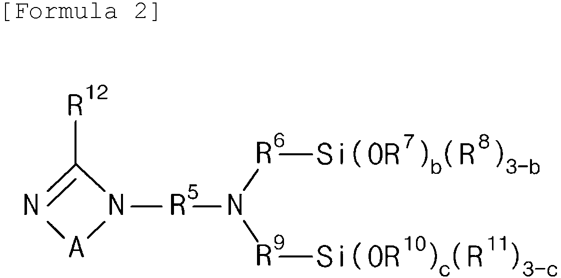
wherein R⁵, R⁶ and R⁹ are each independently an alkylene group of 1 to 10 carbon atoms, R⁷, R⁸, R¹⁰ and R¹¹ are each independently an alkyl group of 1 to 10 carbon atoms, R¹² is hydrogen or an alkyl group of 1 to 10 carbon atoms, b and c are each independently 0, 1, 2 or 3, where b+c≥1 is satisfied, and A is 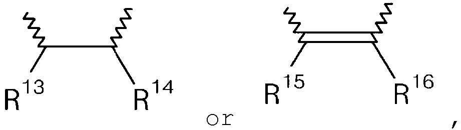 where R¹³, R¹⁴, R¹⁵ and R¹⁶ are each independently hydrogen or an alkyl group of 1 to 10 carbon atoms; 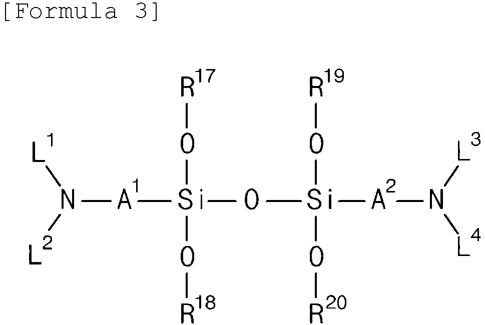
wherein A¹ and A² are each independently a divalent hydrocarbon group of 1 to 20 carbon atoms, which contains an oxygen atom or not, R¹⁷ to R²⁰ are each independently a monovalent hydrocarbon group of 1 to 20 carbon atoms, L¹ to L⁴ are each independently a divalent, trivalent, or tetravalent alkylsilyl group which is substituted with an alkyl group of 1 to 10 carbon atoms, or a monovalent hydrocarbon group of 1 to 20 carbon atoms, or L¹ and L², and L³ and L⁴ are combined with each other to form a ring of 1 to 5 carbon atoms, the ring thus formed including one to three heteroatoms selected from the group consisting of N, O and S; 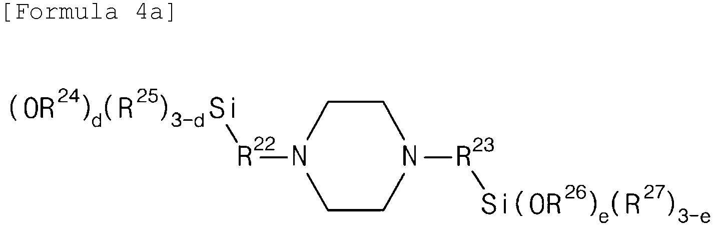
wherein R²² and R²³ are each independently an alkylene group of 1 to 10 carbon atoms, or -R²⁸ [OR²⁹]_{f}-, R²⁴ to R27 are each independently an alkyl group of 1 to 10 carbon atoms, R²⁸ and R²⁹ are each independently an alkylene group of 1 to 10 carbon atoms, d and e are each independently 0, or an integer selected from 1 to 3, where d+e is an integer of 1 or more, and f is an integer of 1 to 30; 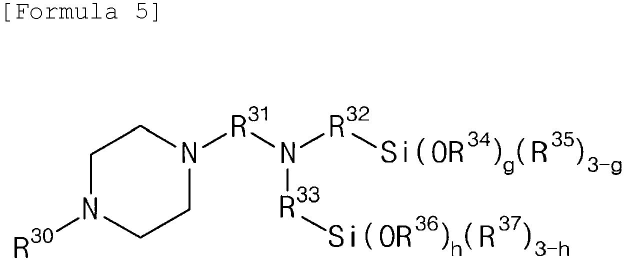
wherein R³⁰ is a monovalent hydrocarbon group of 1 to 30 carbon atoms, R³¹ to R³³ are each independently an alkylene group of 1 to 10 carbon atoms, R³⁴ to R³⁷ are each independently an alkyl group of 1 to 10 carbon atoms, and g and h are each independently 0, or an integer selected from 1 to 3, where g+h is an integer of 1 or more; 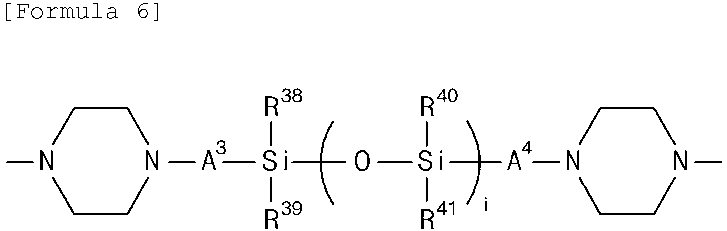
wherein A³ and A⁴ are each independently an alkylene group of 1 to 10 carbon atoms, R³⁸ to R⁴¹ are each independently an alkyl group of 1 to 10 carbon atoms, or an alkoxy group of 1 to 10 carbon atoms, and i is an integer selected from 1 to 30; and 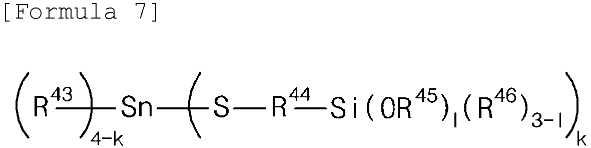
wherein R⁴³, R⁴⁵ and R⁴⁶ are each independently an alkyl group of 1 to 10 carbon atoms, R⁴⁴ is an alkylene group of 1 to 10 carbon atoms, and k is an integer selected from 1 to **4.**

2. The modified conjugated diene-based polymer of claim 1, wherein the modified conjugated diene-based polymer has a number average molecular weight (Mn) of 1,000 g/mol to 2,000,000 g/mol, and a weight average molecular weight (Mw) of 1,000 g/mol to 3,000,000 g/mol.

3. The modified conjugated diene-based polymer of claim 1, wherein the molecular weight distribution (PDI; MWD) is from 1.0 to less than 1.7.

4. The modified conjugated diene-based polymer of claim 1, wherein a Mooney viscosity is 40 or more at 100°C.

5. A rubber composition comprising the modified conjugated diene-based polymer according to claim 1, and a filler.

6. The rubber composition of claim 5, wherein the rubber composition comprises 0.1 parts by weight to 200 parts by weight of the filler based on 100 parts by weight of the modified conjugated diene-based polymer.

7. The rubber composition of claim 6, wherein the filler is a silica-based filler or a carbon black-based filler.

## Patentansprüche

1. Ein modifiziertes Polymer auf Basis von konjugiertem Dien mit:
einer unimodalen Form der Molekulargewichtsverteilungskurve in der Gelpermeationschromatographie (GPC),
einer Molekulargewichtsverteilung (PDI; MWD) von weniger als 1,7 und
einem Si-Gehalt von 100 ppm oder mehr, bezogen auf das Gewicht, und
wobei das modifizierte Polymer auf Basis von konjugiertem Dien eine Wiederholungseinheit, die von einem aromatischen Vinylmonomer abgeleitet wurde, in einer Menge von 15 Gew.-% oder mehr und weniger als 30 Gew.-%, umfasst,
wobei der Si-Gehalt durch ein ICP-Analyseverfahren unter Verwendung einer optischen, induktiv gekoppelten Plasma-Emissionsspektroskopie gemessen wird,
wobei das modifizierte Polymer auf Basis von konjugiertem Dien eine Wiederholungseinheit umfasst, die von einem Monomer auf Basis von konjugiertem Dien abgeleitet ist, sowie eine funktionelle Gruppe, die von einem Modifikator abgeleitet ist,
wobei der Modifikator eine Verbindung ist, dargestellt durch eine Formel, ausgewählt aus: 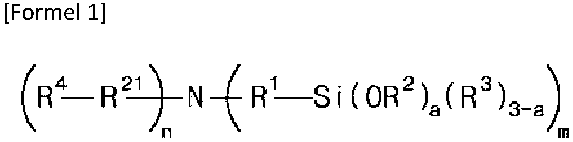
wobei R¹ eine Einfachbindung oder eine Alkylengruppe mit 1 bis 5 Kohlenstoffatomen ist, R² und R³ jeweils unabhängig Wasserstoff oder
eine Alkylgruppe mit 1 bis 5 Kohlenstoffatomen sind, R⁴ Wasserstoff, eine Alkylgruppe mit 1 bis 5 Kohlenstoffatomen, eine vierwertige Alkylsilylgruppe, die mit einer Alkylgruppe mit 1 bis 5 Kohlenstoffatomen substituiert ist, oder ein Heterocyclus mit 2 bis 5 Kohlenstoffatomen ist, R²¹ -[R⁴²O]ⱼ- ist, wobei R⁴² eine Alkylengruppe mit 1 bis 5 Kohlenstoffatomen ist, a eine ganze Zahl von 2 oder 3 ist, m eine ganze Zahl ist, ausgewählt aus 1 bis 3, n eine ganze Zahl ist, welche 1 oder 2 ist, wobei m + n = 3 erfüllt ist, und, falls n gleich 2 ist, eine Vielzahl von R⁹-Gruppen gleich oder verschieden sind, und j eine ganze Zahl ist, ausgewählt aus 1 bis 10; 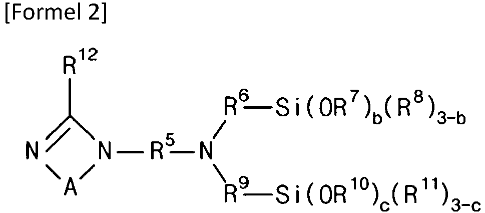
wobei R⁵, R⁶ und R⁹ jeweils unabhängig eine Alkylengruppe mit 1 bis 10 Kohlenstoffatomen sind, R⁷, R⁸, R¹⁰ und R¹¹ jeweils unabhängig eine Alkylgruppe mit 1 bis 10 Kohlenstoffatomen sind, R¹² Wasserstoff oder eine Alkylgruppe mit 1 bis 10 Kohlenstoffatomen ist, b und c jeweils unabhängig 0, 1, 2 oder 3 sind, wobei b + c ≥ 1 erfüllt ist,
und A 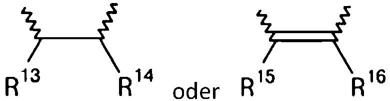 ist, wobei R¹³, R¹⁴, R¹⁵ und R¹⁶ jeweils unabhängig Wasserstoff oder eine Alkylgruppe mit 1 bis 10 Kohlenstoffatomen sind; 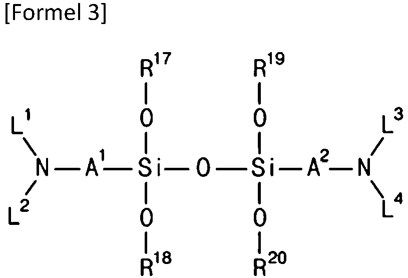
wobei A¹ und A² jeweils unabhängig eine zweiwertige Kohlenwasserstoffgruppe mit 1 bis 20 Kohlenstoffatomen sind, die ein Sauerstoffatom enthält oder nicht, R¹⁷ bis R²⁰ jeweils unabhängig eine einwertige Kohlenwasserstoffgruppe mit 1 bis 20 Kohlenstoffatomen sind, L¹ bis L⁴ jeweils unabhängig eine zweiwertige, dreiwertige, oder vierwertige Alkylsilylgruppe sind, die mit einer Alkylgruppe mit 1 bis 10 Kohlenstoffatomen substituiert ist, oder eine einwertige Kohlenwasserstoffgruppe mit 1 bis 20 Kohlenstoffatomen sind, oder L¹ und L² und L³ und L⁴ miteinander verbunden sind, um einen Ring mit 1 bis 5 Kohlenstoffatomen zu bilden, wobei der so gebildete Ring ein bis drei Heteroatome enthält, ausgewählt aus der Gruppe, bestehend aus N, O und S; 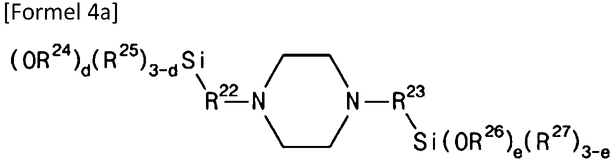
wobei R²² und R²³ jeweils unabhängig eine Alkylengruppe mit 1 bis 10 Kohlenstoffatomen oder -R²⁸[OR²⁹]_{f}- sind, R²⁴ bis R²⁷ jeweils eine Alkylgruppe mit 1 bis 10 Kohlenstoffatomen sind, R²⁸ und R²⁹ jeweils unabhängig eine Alkylengruppe mit 1 bis 10 Kohlenstoffatomen sind, d und e jeweils unabhängig 0 oder eine ganze Zahl sind, ausgewählt aus 1 bis 3, wobei d + e eine ganze Zahl von 1 oder mehr ist, und f eine ganze Zahl von 1 bis 30 ist; 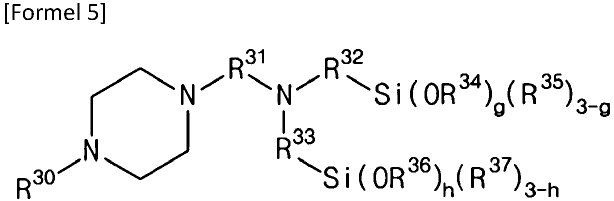
wobei R³⁰ eine einwertige Kohlenwasserstoffgruppe mit 1 bis 30 Kohlenstoffatomen ist, R³¹ bis R³³ jeweils unabhängig eine Alkylengruppe mit 1 bis 10 Kohlenstoffatomen sind, R³⁴ bis R³⁷ jeweils unabhängig eine Alkylgruppe mit 1 bis 10 Kohlenstoffatomen sind und g und h jeweils 0 oder eine ganze Zahl sind, ausgewählt aus 1 bis 3, wobei g + h eine ganze Zahl von 1 oder mehr ist; 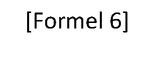 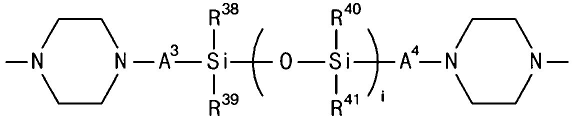
wobei A³ und A⁴ jeweils unabhängig eine Alkylengruppe mit 1 bis 10 Kohlenstoffatomen sind, R³⁸ bis R⁴¹ jeweils unabhängig eine Alkylgruppe mit 1 bis 10 Kohlenstoffatomen oder eine Alkoxygruppe mit 1 bis 10 Kohlenstoffatomen sind und i eine ganze Zahl ist, ausgewählt aus 1 bis 30; und 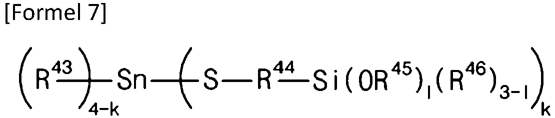
wobei R⁴³, R⁴⁵ und R⁴⁶ jeweils unabhängig eine Alkylgruppe mit 1 bis 10 Kohlenstoffatomen sind, R⁴⁴ eine Alkylengruppe mit 1 bis 10 Kohlenstoffatomen ist und k eine ganze Zahl ist, ausgewählt aus 1 bis 4.

2. Das modifizierte Polymer auf Basis von konjugiertem Dien gemäß Anspruch 1, wobei das modifizierte Polymer auf Basis von konjugiertem Dien ein zahlenmittleres Molekulargewicht (Mn) von 1.000 g/Mol bis 2.000.000 g/Mol und ein Gewichtsmittel des Molekulargewichts (Mw) von 1.000 g/Mol bis 3.000.000 g/Mol aufweist.

3. Das modifizierte Polymer auf Basis eines konjugierten Diens gemäß Anspruch 1, wobei die Molekulargewichtsverteilung (PDI; MWD) von 1,0 bis weniger als 1,7 beträgt.

4. Das modifizierte Polymer auf Basis eines konjugierten Diens gemäß Anspruch 1, wobei eine Mooney-Viskosität bei 100 °C 40 oder mehr beträgt.

5. Eine Kautschukzusammensetzung, umfassend das modifizierte Polymer auf Basis von konjugiertem Dien gemäß Anspruch 1 und einen Füllstoff.

6. Die Kautschukzusammensetzung gemäß Anspruch 5, wobei die Kautschukzusammensetzung 0,1 Gewichtsteile bis 200 Gewichtsteile des Füllstoffs, bezogen auf 100 Gewichtsteile des modifizierten Polymers auf Basis von konjugiertem Dien, umfasst.

7. Die Kautschukzusammensetzung gemäß Anspruch 6, wobei der Füllstoff ein Füllstoff auf Basis von Siliciumdioxid oder ein Füllstoff auf Basis von Ruß ist.

## Revendications

1. Polymère à base de diène conjugué modifié, présentant :
une courbe de distribution de poids moléculaire par chromatographie par perméation de gel (GPC) de forme unimodale,
une distribution de poids moléculaire (PDI ; MWD) inférieure à 1,7, et
une teneur en Si de 100 ppm ou plus en poids, et
où le polymère modifié à base de diène conjugué comprend un motif répétitif dérivé d'un monomère vinylique aromatique dans une teneur de 15 % en poids ou plus et moins de 30 % en poids,
où la teneur en Si est mesurée par un procédé d'analyse ICP au moyen d'une spectroscopie d'émission optique à plasma à couplage inductif,
où le polymère modifié à base de diène conjugué comprend un motif répétitif dérivé d'un monomère à base de diène conjugué et un groupe fonctionnel dérivé d'un modificateur, où le modificateur est un composé représenté par une formule sélectionnée entre : 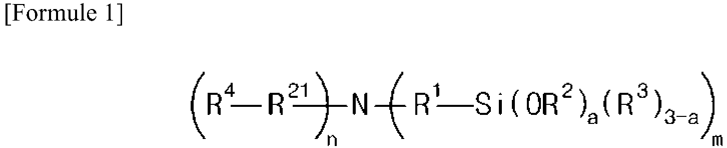
où R¹ est une liaison simple ou un groupe alkylène de 1 à 5 atomes de carbone, R² et R³ représentent chacun indépendamment un atome d'hydrogène ou un groupe alkyle de 1 à 5 atomes de carbone, R⁴ représente un atome d'hydrogène, un groupe alkyle de 1 à 5 atomes de carbone, un groupe alkylsilyle tétravalent substitué par un groupe alkyle de 1 à 5 atomes de carbone, ou un hétérocycle de 2 à 5 atomes de carbone, R²¹ représente -[R⁴²O]ⱼ-, où R⁴² est un groupe alkylène de 1 à 5 atomes de carbone, a est un nombre entier égal à 2 ou 3, m est un nombre entier sélectionné entre 1 et 3, n est un nombre entier égal à 1 ou 2, où la condition m + n = 3 est satisfaite, et si n est égal à 2, une pluralité de groupes R⁹ sont identiques ou différents, et j est un nombre entier sélectionné entre 1 et 10 ; 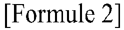 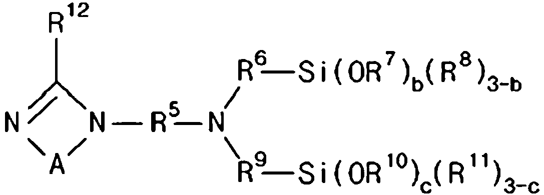
où R⁵, R⁶ et R⁹ représentent chacun indépendamment un groupe alkylène de 1 à 10 atomes de carbone, R⁷, R⁸, R¹⁰ et R¹¹ représentent chacun indépendamment un groupe alkyle de 1 à 10 atomes de carbone, R¹² représente un atome d'hydrogène ou un groupe alkyle de 1 à 10 atomes de carbone, b et c étant égaux chacun indépendamment à 0, 1, 2 ou 3, où la condition b + c ≥ 1 est satisfaite,
et A représente 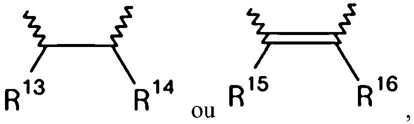 **où** R¹³, R¹⁴, R¹⁵ et R¹⁶ représentent chacun indépendamment un atome d'hydrogène ou un groupe alkyle de 1 à 10 atomes de carbone ; 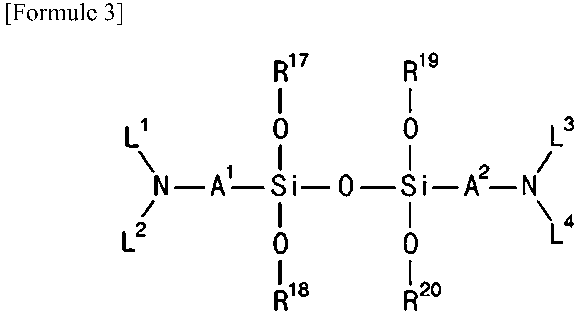
où A¹ et A² représentent chacun indépendamment un groupe hydrocarbure divalent de 1 à 20 atomes de carbone, contenant ou non un atome d'oxygène, R¹⁷ à R²⁰ représentent chacun indépendamment un groupe hydrocarbure monovalent de 1 à 20 atomes de carbone, L¹ à L⁴ représentent chacun indépendamment un groupe alkylsilyle divalent, trivalent ou tétravalent substitué par un groupe alkyle de 1 à 10 atomes de carbone, ou un groupe hydrocarbure monovalent de 1 à 20 atomes de carbone, ou L¹ et L², ainsi que L³ et L⁴, sont combinés entre eux pour former un cycle de 1 à 5 atomes de carbone, le cycle ainsi formé comprenant un à trois hétéroatomes sélectionnés dans le groupe constitué de N, O et S ; 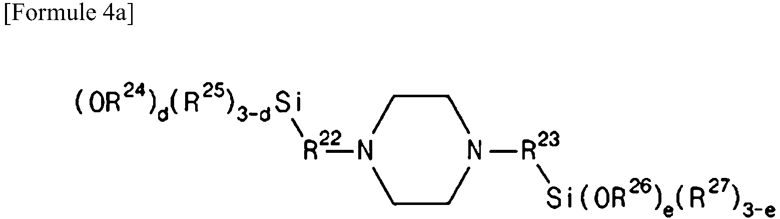
où R²² et R²³ représentent chacun indépendamment un groupe alkylène de 1 à 10 atomes de carbone, ou -R²⁸[OR²⁹]_{f}-, R²⁴ à R²⁷ représentent chacun indépendamment un groupe alkyle de 1 à 10 atomes de carbone, R²⁸ et R²⁹ représentent chacun indépendamment un groupe alkylène de 1 à 10 atomes de carbone, d et e sont chacun indépendamment égaux à 0 ou à un nombre entier sélectionné entre 1 et 3, où d + e est un nombre entier égal ou supérieur à 1, et f est un nombre entier de 1 à 30 ; 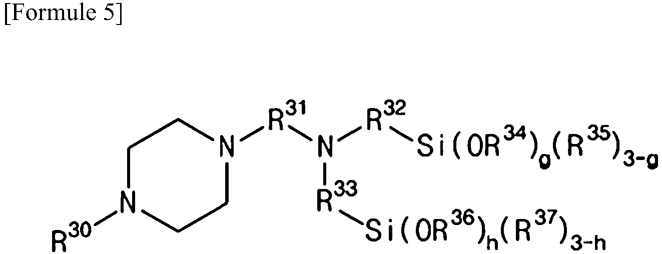
où R³⁰ est un groupe hydrocarbure monovalent de 1 à 30 atomes de carbone, R³¹ à R³³ représentent chacun indépendamment un groupe alkylène de 1 à 10 atomes de carbone, R³⁴ à R³⁷représentent chacun indépendamment un groupe alkyle de 1 à 10 atomes de carbone, et g et h sont chacun indépendamment égaux à 0 ou à un nombre entier choisi de 1 à 3, où g + h est un nombre entier égal ou supérieur à 1 ; 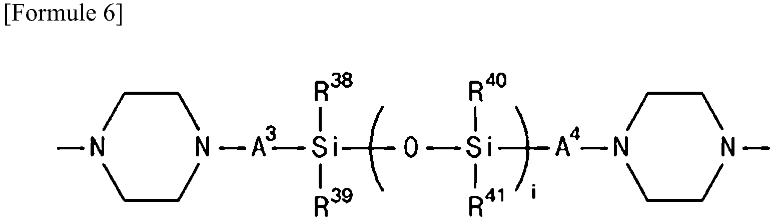
où A³ et A⁴ représentent chacun indépendamment un groupe alkylène de 1 à 10 atomes de carbone, R³⁸ à R⁴¹ représentent chacun indépendamment un groupe alkyle de 1 à 10 atomes de carbone ou un groupe alcoxy de 1 à 10 atomes de carbone, et i est un nombre entier choisi de 1 à30 ; et 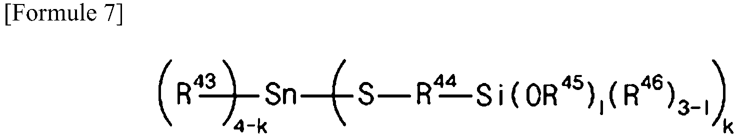
où R⁴³, R⁴⁵et R⁴⁶représentent chacun indépendamment un groupe alkyle de 1 à 10 atomes de carbone, R⁴⁴ représente un groupe alkylène de 1 à 10 atomes de carbone, et k est un nombre entier choisi de 1 à4.

2. Polymère à base de diène conjugué modifié selon la revendication 1, où ledit polymère à base de diène conjugué modifié présente un poids moléculaire moyen en nombre (Mn) de 1 000 g/mol à 2 000 000 g/mol, et un poids moléculaire moyen en poids (Mw) de 1 000 g/mol à3 000 000 g/mol.

3. Polymère à base de diène conjugué modifié selon la revendication 1, où la distribution de poids moléculaire (PDI ; MWD) est de 1,0 àmoins de 1,7.

4. Polymère modifié à base de diène conjugué selon la revendication 1, où la viscosité Mooney est supérieure ou égale à 40 à 100 °C.

5. Composition de caoutchouc comprenant le polymère à base de diène conjugué modifié selon la revendication 1, et une charge.

6. Composition de caoutchouc selon la revendication 5, où ladite composition de caoutchouc comprend de 0,1 partie en poids à 200 parties en poids de la charge pour 100 parties en poids du polymère à base de diène conjugué modifié.

7. Composition de caoutchouc selon la revendication 6, où la charge est une charge à base de silice ou une charge à base de noir de carbone.
